# EUROPEAN PATENT APPLICATION

(11) **EP 4 628 672 A1**
(43) Date of publication of application: **08.10.2025**
(21) Application number: 25152699.2
(22) Date of filing: 19.01.2025
(51) Int. Cl.: E04D 13/10, F24S 20/67, F24S 25/615, F24S 25/636, H02S 20/23

(54) **MOUNTING SYSTEM FOR A METAL PANEL**

(30) Priority: 19.01.2024 US 202463622883 P
(71) Applicant: RMH Tech LLC, Colorado Springs, CO 80908 (US)
(72) Inventor: MOSS, Jonathon, Colorado Springs, 80908 (US); BONTJE, Samuel D., Colorado Springs, 80908 (US)
(74) Representative: Hahner, Ralph

(57) **Abstract**

A mounting system for a metal panel includes a mounting device couplable to a panel projection of a metal panel. The mounting system includes a crossmember that is couplable to the mounting device either directly via fasteners or indirectly via an adaptor. Where the mounting system includes the adaptor, the adaptor is couplable to the mounting device via a fastener. The adaptor and the crossmember have interlocking features that allow for the coupling of the adaptor to the crossmember at a location proximate to the mounting device. The mounting system optionally includes a clip that is configured to engage the crossmember via a second fastener. The clip and the crossmember have interlocking features that allow for the coupling of the clip to the crossmember at any location along the length of the crossmember. An extension is optionally usable to couple an additional crossmember to the crossmember.

## Description

### CROSS-REFERENCE TO RELATED APPLICATIONS

This application claims the benefit of priority under 35 U.S.C. § 119(e) to U.S. Provisional Patent Application No. 63/622,883, filed on January 19, 2024, the entirety of which is incorporated herein by reference.

### FIELD

The disclosure relates to a mounting system configured to be secured to a projection extending from a metal panel defining a roof or a sidewall of a building.

### BACKGROUND

The background description includes information that may be useful in understanding the present inventive subject matter. It is not an admission that any of the information provided herein is prior art or relevant to the presently claimed disclosure, or that any publication specifically or implicitly referenced is prior art.

Metal panels are frequently used to construct parts of buildings such as roofs and sidewalls. During construction, adjacent panels are connected at joints, which are weatherproof and protect the building from the external environment. One type of joint is a standing seam joint that extends or protrudes away from the main surfaces of the panels. The standing seam mechanically joins two adjacent metal panels. These seamed joints may have many different configurations, including a single fold, double fold, snap seam, snap lock, nail strip, batten cap, T-seam, and bulb seam. Some roof joints, including bulb seams, may be slidably connected to an underlying halter or clip, such that the roof joint "floats" on the underlying halter or clip. Some metal panels have ribs that extend from the panel. The ribs are positioned between seams that join the metal panel to adjacent metal panels.

It is often desirable to install various types of structures such as heating units, air conditioning units, ventilation equipment, snow retention systems (or snow fences), solar panels, and the like on metal panels, particularly metal panels used to form a roof. These structures can be secured to the metal panel with fasteners. However, installing structures on the roof in a manner that punctures the metal panel or which requires the formation of a hole through the metal panel is undesirable. Puncturing the metal panel or a roof joint with a fastener that forms or requires a hole presents leakage and corrosion issues for the roof, and holes in the metal panel are aesthetically displeasing. Further, forming holes through a metal panel may void a warranty provided by the manufacturer.

Mounting devices can provide a location for these structures to mount to a roof. Typically, a mounting device is secured to a fold, a joint, or a seam between two metal panels or to a rib extending from a metal panel (collectively referred to herein as "a panel projection") without puncturing the metal panel. A structure may then be connected to the mounting device. Mounting devices can be secured to the roof by squeezing or clamping to the panel projection that extends away from the roof.

### SUMMARY

Previous known mounting systems include a crossmember with a support bracket. An adaptor is insertable into the support bracket from an end of the crossmember, and slid along the run of the support bracket until a desired position on the support bracket that corresponds to a panel projection of a metal panel is achieved. This populating of the crossmember with adaptors can be difficult, including because of variances that occur during the fabrication of the crossmember along the length that results in binding between the adaptors and the crossmember. Due to the difficulty of the populating, and as the crossmembers are typically approximately 8 feet in length, the entire run of the support bracket is often populated with adaptors on a ground surface, and then the populated crossmember is positioned above ground on the metal panel.

One such known mounting system is U.S. Patent No. 6,470,629, issued on October 29, 2002, which is incorporated herein by reference in the entirety. In addition, select known mounting systems include a panel support member and a mounting adaptor that couple to a mounting device, which is installable on a panel projection of a metal panel. The corresponding cross-sections of the continuous channel portion of the panel support member and the attachment portion, beaded portion, and alignment portion of the mounting adaptor prevent the coupling of the mounting adaptor and the channel portion in any fashion other than sliding the mounting adaptor into the channel portion of the panel support member from an end of the panel support member. Again, due to the typical length of the panel support member, it is preferable to populate the entire panel support member with all mounting adaptors when on a ground surface (e.g., either with the mounting devices or without, depending on if the mounting devices are to be installed directly to the panel projections prior to the mounting adaptors being coupled to the mounting devices). This increases installation time, as it requires interaction with the mounting adaptors twice - once on the ground surface, and again to better align the mounting adaptors with the mounting devices while the panel support member is positioned against the metal panel.

As such, there exists a need for a mounting system for a metal panel that does not include the complex and restrictive interlocking features of known mounting systems. The mounting system should include mounting devices that are economical to produce (i.e., requiring less manufacturing material, cost, and/or time) and which are able to secure to a panel projection quickly and easily by decreasing installation time compared to known systems. The mounting system should also provide increased performance compared to known systems.

The mounting system should include a crossmember with a support bracket that is able to couple to a mounting device secured to a panel projection on a metal panel. For example, the support bracket should be able to directly couple to the mounting device, or optionally indirectly couple to the mounting device via an adaptor. Where the mounting system includes the adaptor, the adaptor should be installable to the support bracket at any point along the length of the crossmember and while the crossmember is positioned proximate to the panel projections on the metal panel, as opposed to only being slidable onto the support bracket from an end (i.e., while the crossmember rests on a ground surface).

In addition, it would be beneficial to provide a clip to prevent interference of the mounting system from accumulation (i.e., snow), debris, or the like. The clip should similarly be couplable to the support bracket of the crossmember at any point along the length of the crossmember and while the crossmember is positioned on the metal panel, as opposed to only being slidable onto the support bracket from an end (i.e., while the crossmember rests on a ground surface). This ability to couple to the crossmember at any location along the length also reduces installation time, as it reduces the possibility that adaptors and clips are populated on the crossmember in an improper order needing to be corrected prior to installation (i. e., which may require again removing the crossmember from the metal panel and adjusting on the ground surface).

Embodiments of the present disclosure are directed to a mounting system for a metal panel. The mounting system includes a mounting device (i.e., such as a clamp or a bracket) that engages a panel projection of the metal panel, including via fasteners inserted through apertures in a sidewall of the mounting device that engage the panel projection. The mounting system includes a crossmember with a rail and a support bracket that extends from a sidewall of the rail. The support bracket includes an aperture that aligns with an additional aperture in the mounting device when the support bracket is positioned on the mounting device and the metal panel. A fastener is insertable through the aperture of the support bracket and the additional aperture of the mounting device, securing the crossmember to the mounting device.

Embodiments of the present disclosure are additionally directed to an adaptor that is usable to couple the crossmember to the mounting device instead of (or in addition to) the apertures through the crossmembers. The adaptor includes an aperture that aligns with the additional aperture in the mounting device when the adaptor is positioned on the mounting device. A fastener is insertable through the aperture of the adaptor and the additional aperture of the mounting device, securing the adaptor to the mounting device.

Securing the adaptor to the mounting device additionally secures the crossmember to the mounting device, and the adaptor and the crossmember have interlocking features. In particular, the adaptor includes a protrusion and the support bracket includes a notch configured to receive the protrusion. In addition, the support bracket includes a protrusion and the adaptor includes a notch configured to receive the protrusion. These interlocking features positioned at a distal end of the support bracket and within a body of the adaptor, respectively, allow for the insertion of the adaptor from a direction other than via an end wall of the crossmember. For example, the adaptor may be inserted in the crossmember directly adjacent to (i.e., above) a corresponding mounting device while the crossmember is positioned on the mounting device. It is noted that the adaptor may include an arm, where a proximal end of the arm is configured to engage the rail of the crossmember by being insertable into an upper channel at least partially defined by at least one tab extending from the sidewall of the rail from which the support bracket also extends.

Embodiments of the present disclosure are further directed to a clip that is installable on the crossmember, to make points of contact between the crossmember and the metal panel in addition to the engagement of the panel projections with the mounting devices via the adaptors. Where the metal panel is a sloped surface (i.e., such as a roof), the clip may be positioned on the upslope side of the roof relative to the positioning of the crossmember. The clip includes a body that is contoured to conform to an arc, and/or to a corner with adjacent straight portions. A head of the clip includes an aperture able to receive a fastener (or an aperture in the head is formed by the fastener). Once through the aperture of the head, the fastener may engage a recess on the support bracket, securing the clip to the support bracket.

The clip and the support bracket have interlocking features. In particular, the clip includes a protrusion and the support bracket includes the notch configured to receive the protrusion of the clip and, optionally, the protrusion of the adaptor in other locations along the length of the crossmember. In addition, the clip includes a notch and the support bracket includes the protrusion configured to engage the notch of the clip and, optionally, the notch of the adaptor in other locations along the length of the crossmember. These interlocking features positioned at the distal end of the support bracket and within the head of the clip, respectively, allow for the insertion of the clip from a direction other than via an end wall of the crossmember. For example, the clip may be inserted in the crossmember directly adjacent to (i.e., above) any point on the metal panel along the length of the crossmember.

Embodiments of the present disclosure are still further directed to an extension that is insertable into a groove within the crossmember. The groove within the crossmember is at least partially defined by a first lower channel in the rail and a second lower channel in the support bracket, which are at least partially defined by a first tab extending from the sidewall of the rail from which the support bracket also extends, and a second tab extending from the distal end of the support bracket toward the tab extending from the sidewall of the rail. The extension allows for an additional crossmember to be installed in a row with the first crossmember by positioning a first end of the extension in the groove of the first crossmember and a second end of the extension in a groove of the additional crossmember, increasing the total length (and the size, in general) of the mounting system.

A first aspect of the present disclosure is to provide a mounting system for a metal panel. The mounting system includes a mounting device operable to couple to a panel projection of the metal panel. The mounting device includes a first aperture. The mounting system includes a crossmember. The crossmember includes a rail with an upper channel formed by a tab extending outward from a sidewall of the rail. The crossmember includes a support bracket that extends outward from the sidewall, where the support bracket includes a first protrusion that extends toward the rail and a first notch. The mounting system includes an adaptor. The adaptor includes a body with a second protrusion and a second notch, the second protrusion projecting away from the rail of the crossmember when the adaptor is coupled to the crossmember such that the second protrusion is adapted to be insertable into the first notch of the support bracket, and the second notch adapted to receive the first protrusion of the support bracket. The adaptor includes an arm with a proximal end insertable into the upper channel. The adaptor includes a leg including a second aperture. The mounting system includes a fastener operable to be inserted through the second aperture of the foot and into the first aperture of the mounting device to couple the adaptor to the mounting device. Coupling the adaptor to the mounting device via the fastener secures the support bracket of the crossmember to the mounting device.

The mounting system of the first aspect may include, optionally, wherein, when the adaptor is coupled to the mounting device via the fastener, at least a portion of the support bracket is positioned in a gap between the adaptor and the mounting device.

The mounting system of the first aspect may include one or more of the previous embodiments and, optionally, wherein, when the adaptor is coupled to the mounting device via the fastener, a first surface of the support bracket is in contact with a surface of the mounting device, a first surface of the adaptor is in contact with a second surface of the support bracket, and a second surface of the adaptor is in contact with the surface of the mounting device.

In at least one embodiment, when the adaptor is coupled to the mounting device via the fastener, the first surface of the support bracket, the surface of the mounting device, and the second surface of the adaptor are substantially co-planar.

The mounting system of the first aspect may include one or more of the previous embodiments and, optionally, wherein, when the adaptor is coupled to the mounting device via the fastener, the first surface of the support bracket, the surface of the mounting device, and the second surface of the adaptor are each substantially parallel to a surface of the metal panel.

The mounting system of the first aspect may include one or more of the previous embodiments and, optionally, wherein, when the adaptor is coupled to the mounting device via the fastener, a third surface of the crossmember is separated from a projection edge of the panel projection by a gap.

The mounting system of the first aspect may include one or more of the previous embodiments and, optionally, wherein, when the adaptor is coupled to the crossmember, a gap exists within the upper channel between the proximal end of the arm of the adaptor and an interior surface of the rail.

The mounting system of the first aspect may include one or more of the previous embodiments and, optionally, wherein the support bracket includes a recess and the arm of the adaptor includes a projection that engages the recess during insertion of the proximal end of the arm into the upper channel.

The mounting system of the first aspect may include one or more of the previous embodiments and, optionally, wherein the first protrusion and the first notch of the support bracket forms an interlocking assembly with a partial C-shape that is contoured to conform to an arc that is no greater than 180 degrees.

The mounting system of the first aspect may include one or more of the previous embodiments and, optionally, the arc of the interlocking assembly with the partial C-shape is greater than 90 degrees.

The mounting system of the first aspect may include one or more of the previous embodiments and in some embodiments, the first notch comprises a closed end and an open end, the open end facing the sidewall of the rail.

The mounting system of the first aspect may include one or more of the previous embodiments and, optionally, an axis of the first notch that extends from the closed end and out of the open end intersects a reference plane oriented parallel to the sidewall of the rail.

The mounting system of the first aspect may include one or more of the previous embodiments and, optionally, the axis of the first notch intersects the reference plane at an oblique angle.

The mounting system of the first aspect may include one or more of the previous embodiments and, optionally, the first notch comprises a closed end and an open end, the open end having a minimum interior width, and the second protrusion of the adaptor comprises a free end with a maximum outer width that is less than the minimum interior width such that the free end of the second protrusion may be inserted through the open end of the first notch.

The mounting system of the first aspect may include one or more of the previous embodiments and, optionally, further includes a clip and a second fastener. The clip includes a head with a third protrusion and a third notch, wherein the third protrusion projects away from the rail of the crossmember when the clip is coupled to the crossmember, the third protrusion being insertable into the first notch within the support bracket, and the third notch adapted to receive the first protrusion of the support bracket. The clip includes a leg operable to be positioned proximate to the metal panel. The clip includes a body between the head and the leg. The second fastener is insertable through the head of the clip to engage a recess on the support bracket. Engagement of the recess with the second fastener secures the clip to the support bracket.

The mounting system of the first aspect may include one or more of the previous embodiments and, optionally, wherein the second fastener is insertable into a pre-formed aperture within the head of the clip.

The mounting system of the first aspect may include one or more of the previous embodiments and, optionally, wherein the leg includes a foot that, when the second fastener secures the clip to the support bracket, is secured against a surface of the metal panel.

The mounting system of the first aspect may include one or more of the previous embodiments and, optionally, further comprises an extension insertable into a groove of the crossmember at least partially defined by a first lower channel and a second lower channel of the crossmember. The extension is configured to couple an additional crossmember to the crossmember.

The mounting system of the first aspect may include one or more of the previous embodiments and, optionally, the extension includes a first projection that is insertable into the first lower channel, and a second projection that is insertable into the second lower channel.

The mounting system of the first aspect may include one or more of the previous embodiments and, optionally, wherein the groove is below the upper channel of the crossmember, and wherein the adaptor is stacked on the extension when both are engaged within respective upper and lower channels of the crossmember.

The mounting system of the first aspect may include one or more of the previous embodiments and, optionally, wherein the crossmember is extruded along a length, wherein the adaptor is extruded along a width, and wherein the mounting system is arranged such that the width of the adaptor is oriented with the length of the crossmember.

The mounting system of the first aspect may include one or more of the previous embodiments and, optionally, the metal panel comprises the panel projection and a second panel projection extending substantially parallel to the panel projection, wherein when the crossmember is secured to the mounting device, the crossmember is oriented approximately perpendicular to the panel projection and the second panel projection.

A second aspect of the present disclosure is to provide a mounting system for a metal panel. The mounting system includes a mounting device operable to couple to a panel projection of the metal panel. The mounting device includes an aperture. The mounting system includes a crossmember with a rail. The crossmember includes a support bracket that extends outward from a sidewall of the rail, where the support bracket includes a groove with an aperture. The mounting system includes a fastener operable to be inserted into the aperture of the groove and the aperture of the mounting device to couple the crossmember to the mounting device.

The mounting system of the second aspect may include, optionally, wherein, when the crossmember is coupled to the mounting device via the fastener, a surface of the crossmember is in contact with a surface of the mounting device, and wherein the surface of the crossmember and the surface of the mounting device are each substantially parallel to a surface of the metal panel.

The mounting system of the second aspect may include one or more of the previous embodiments and, optionally, wherein, when the crossmember is coupled to the mounting device via the fastener, a second surface of the crossmember is in contact with a projection edge of the panel projection.

The mounting system of the second aspect may include one or more of the previous embodiments and, optionally, further comprises a clip and a second fastener. The clip includes a head with a protrusion that projects away from the rail and is insertable into a notch within the support bracket, and a notch able to receive a protrusion of the support bracket that extends toward the rail. The clip includes a leg operable to be positioned proximate to the metal panel. The clip includes a body between the head and the leg. The head of the clip includes an aperture though which the second fastener may engage a recess on the support bracket. Engagement of the recess with the second fastener secures the clip to the support bracket.

The mounting system of the second aspect may include one or more of the previous embodiments and, optionally, wherein the leg includes a foot that, when the clip is coupled to the crossmember via the second fastener, is secured against a surface of the metal panel.

The mounting system of the second aspect may include one or more of the previous embodiments and, optionally, further comprises an extension insertable into a groove of the crossmember at least partially defined by a first lower channel and a second lower channel of the crossmember. The extension is configured to couple an additional crossmember to the crossmember.

The mounting system of the second aspect may include one or more of the previous embodiments and, optionally, the extension includes a first protrusion that is insertable into the first lower channel, and a second protrusion that is insertable into the second lower channel.

A third aspect of the present disclosure is to provide a method for installation of a mounting system to a metal panel. The method may include, but is not limited to, coupling a mounting device to a panel projection of the metal panel. The mounting device includes a first aperture. The method may include, but is not limited to, positioning a crossmember on the mounting device. The crossmember includes a rail including an upper channel formed by a tab extending outward from a sidewall of the rail. The crossmember includes a support bracket that extends outward from the sidewall, where the support bracket includes a first protrusion that extends toward the rail and a first notch. The method may include, but is not limited to, installing an adaptor on the crossmember. The adaptor includes a body including a second protrusion and a second notch, the second protrusion projecting away from the rail of the crossmember when the adaptor is coupled to the crossmember such that the second protrusion is inserted into the first notch of the support bracket, and the first protrusion of the support bracket is received by the second notch of the adaptor. The adaptor includes an arm with a proximal end inserted into the upper channel. The adaptor includes a leg including a second aperture. The method may include, but is not limited to, coupling the adaptor to the mounting device via a fastener through the second aperture of the foot and the first aperture of the mounting device. Coupling the adaptor to the mounting device via the fastener secures the support bracket of the crossmember to the mounting device.

The method of the third aspect optionally further comprises, but is not limited to, positioning a clip on the crossmember. The clip includes a head with a third protrusion and a third notch, wherein the third protrusion projects away from the rail of the crossmember when the clip is coupled to the crossmember, the third protrusion is inserted into the first notch within the support bracket, and the first protrusion of the support bracket is received by the third notch of the clip. The clip includes a leg operable to be positioned proximate to the metal panel. The clip includes a body between the head and the leg. The method of the third aspect may include, optionally, but is not limited to, coupling the clip to the crossmember via a second fastener that is insertable through the head of the clip to engage a recess on the support bracket. Engagement of the recess with the second fastener secures the clip to the support bracket.

The method of the third aspect may include one or more of the previous embodiments and, optionally further comprises, but is not limited to, coupling an additional crossmember to the crossmember via an extension insertable into a groove of the crossmember at least defined by a first lower channel and a second lower channel of the crossmember. The extension is configured to couple the additional crossmember to the crossmember.

A fourth aspect of the present disclosure is to provide a method for installation of a mounting system to a metal panel. The method may include, but is not limited to, coupling a mounting device to a panel projection of the metal panel. The mounting device includes an aperture. The method may include, but is not limited to, positioning a crossmember on the mounting device. The crossmember includes a rail and a support bracket that extends outward from a sidewall of the rail, the support bracket including a groove with an aperture. The method may include, but is not limited to, coupling the crossmember to the mounting device via a fastener through the aperture of the groove and the aperture of the mounting device. Coupling the crossmember to the mounting device via the fastener secures the crossmember to the mounting device.

A fifth aspect of the present disclosure is to provide a mounting system for a metal panel. The mounting system includes a mounting device, a crossmember, an adaptor, and a fastener. The mounting device is operable to couple to a panel projection of the metal panel, the mounting device including a first aperture. The crossmember includes a rail with a tab extending outward from a sidewall of the rail; and a support bracket that extends outward from the sidewall, the support bracket including an interlocking assembly with a partial C-shape that is contoured to conform to an arc that is no greater than 180 degrees. The adaptor includes a body able to engage the interlocking assembly with the partial C-shape of the support bracket; an arm with a proximal end positionable on the tab of the rail; and a leg including a second aperture. The fastener is operable to be inserted through the first aperture of the foot and into the second aperture of the mounting device to couple the adaptor to the mounting device. Coupling the adaptor to the mounting device via the fastener secures the crossmember to the mounting device.

The mounting system of the fifth aspect may include, optionally, wherein, when the adaptor is coupled to the mounting device via the fastener, at least a portion of the support bracket is positioned in a gap between the adaptor and the mounting device.

The mounting system of the fifth aspect may include one or more of the previous embodiments and, optionally, wherein, when the adaptor is coupled to the mounting device via the fastener, a first surface of the support bracket is in contact with a surface of the mounting device, a first surface of the adaptor is in contact with a second surface of the support bracket, and a second surface of the adaptor is in contact with the surface of the mounting device.

In at least one embodiment, when the adaptor is coupled to the mounting device via the fastener, the first surface of the support bracket, the surface of the mounting device, and the second surface of the adaptor are substantially co-planar.

The mounting system of the fifth aspect may include one or more of the previous embodiments and, optionally, wherein, when the adaptor is coupled to the mounting device via the fastener, the first surface of the support bracket, the surface of the mounting device, and the second surface of the adaptor are each substantially parallel to a surface of the metal panel.

The mounting system of the fifth aspect may include one or more of the previous embodiments and, optionally, wherein, when the adaptor is coupled to the mounting device via the fastener, a third surface of the crossmember is separated from a projection edge of the panel projection by a gap.

The mounting system of the fifth aspect may include one or more of the previous embodiments and, optionally, wherein, when the adaptor is coupled to the crossmember, a gap exists within the upper channel between the proximal end of the arm of the adaptor and an interior surface of the rail.

The mounting system of the fifth aspect may include one or more of the previous embodiments and, optionally, wherein the support bracket includes a recess and the arm of the adaptor includes a projection that engages the recess during insertion of the proximal end of the arm into the upper channel.

The mounting system of the fifth aspect may include one or more of the previous embodiments and, optionally, wherein a first protrusion and a first notch of the support bracket forms the interlocking assembly with the partial C-shape.

The mounting system of the fifth aspect may include one or more of the previous embodiments and, optionally, the arc of the interlocking assembly with the partial C-shape is greater than 90 degrees.

The mounting system of the fifth aspect may include one or more of the previous embodiments and in some embodiments, the first notch comprises a closed end and an open end, the open end facing the sidewall of the rail.

The mounting system of the fifth aspect may include one or more of the previous embodiments and, optionally, an axis of the first notch that extends from the closed end and out of the open end intersects a reference plane oriented parallel to the sidewall of the rail.

The mounting system of the fifth aspect may include one or more of the previous embodiments and, optionally, the axis of the first notch intersects the reference plane at an oblique angle.

The mounting system of the fifth aspect may include one or more of the previous embodiments and, optionally, the first notch comprises a closed end and an open end, the open end having a minimum interior width, and a second protrusion of the adaptor comprises a free end with a maximum outer width that is less than the minimum interior width such that the free end of the second protrusion may be inserted through the open end of the first notch, and wherein the adaptor comprises a second notch.

The mounting system of the fifth aspect may include one or more of the previous embodiments and, optionally, a clip and a second fastener. The clip includes a head able to engage the interlocking assembly with the partial C-shape of the support bracket; a leg operable to be positioned proximate to the metal panel; and a body between the head and the leg. The second fastener is insertable through the head of the clip to engage a recess on the support bracket, wherein engagement of the recess with the second fastener secures the clip to the support bracket.

The mounting system of the fifth aspect may include one or more of the previous embodiments and, optionally, wherein the head of the clip includes a third protrusion and a third notch adapted to engage with the interlocking assembly with the partial C-shape of the support bracket.

The mounting system of the fifth aspect may include one or more of the previous embodiments and, optionally, wherein the second fastener is insertable into a pre-formed aperture within the head of the clip.

The mounting system of the fifth aspect may include one or more of the previous embodiments and, optionally, wherein the leg includes a foot that, when the second fastener secures the clip to the support bracket, is secured against a surface of the metal panel.

The mounting system of the fifth aspect may include one or more of the previous embodiments and, optionally, further comprises an extension insertable into a groove of the crossmember at least partially defined by a first lower channel and a second lower channel of the crossmember. The extension is configured to couple an additional crossmember to the crossmember.

The mounting system of the fifth aspect may include one or more of the previous embodiments and, optionally, the extension includes a first projection that is insertable into the first lower channel, and a second projection that is insertable into the second lower channel.

The mounting system of the fifth aspect may include one or more of the previous embodiments and, optionally, wherein the groove is below the upper channel of the crossmember, and wherein the adaptor is stacked on the extension when both are engaged within respective upper and lower channels of the crossmember.

The mounting system of the fifth aspect may include one or more of the previous embodiments and, optionally, wherein the crossmember is extruded along a length, wherein the adaptor is extruded along a width, and wherein the mounting system is arranged such that the width of the adaptor is oriented with the length of the crossmember.

The mounting system of the fifth aspect may include one or more of the previous embodiments and, optionally, the metal panel comprises the panel projection and a second panel projection extending substantially parallel to the panel projection, wherein when the crossmember is secured to the mounting device, the crossmember is oriented approximately perpendicular to the panel projection and the second panel projection.

A sixth aspect of the present disclosure is directed to a crossmember for a metal panel. The crossmember includes a rail including a first tab extending outward from a sidewall of the rail; and a support bracket that extends outward from the sidewall. The support bracket includes a lower surface that is oriented approximately perpendicular to the sidewall of the rail; a second tab extending toward the first tab, wherein a first bottom surface of the first tab is approximately co-planar with a second bottom surface of the second tab; and an interlocking assembly with a partial C-shape that is contoured to conform to an arc that is no greater than 180 degrees, the interlocking assembly comprising a first protrusion that extends toward the rail and a first notch.

The crossmember of the sixth aspect may include, optionally, the first notch comprises a closed end and an open end, the open end facing the sidewall of the rail; and an axis of the first notch extends from the closed end and out of the open end and intersects a reference plane oriented parallel to the sidewall of the rail.

The phrases "at least one," "one or more," and "and/or," as used herein, are open-ended expressions that are both conjunctive and disjunctive in operation. For example, each of the expressions "at least one of A, B and C," "at least one of A, B, or C," "one or more of A, B, and C," "one or more of A, B, or C" and "A, B, and/or C" means A alone, B alone, C alone, A and B together, A and C together, B and C together, or A, B and C together.

Unless otherwise indicated, all numbers expressing quantities, dimensions, conditions, and so forth used in the specification and claims are to be understood as being modified in all instances by the term "about."

The use of "substantially" in the present disclosure, when referring to a measurable quantity (e.g., a diameter or other distance) and used for purposes of comparison, is intended to mean within 5% of the comparative quantity. The terms "substantially similar to," "substantially the same as," and "substantially equal to," as used herein, should be interpreted as if explicitly reciting and encompassing the special case in which the items of comparison are "similar to," "the same as" and "equal to," respectively.

As used herein, unless otherwise specified, the terms "about," "approximately," etc., when used in relation to numerical limitations or ranges, mean that the recited limitation or range may vary by up to 10%. By way of non-limiting example, "about 750" can mean as little as 675 or as much as 825, or any value therebetween. When used in relation to ratios or relationships between two or more numerical limitations or ranges, the terms "about," "approximately," etc. mean that each of the limitations or ranges may vary by up to 10%; by way of non-limiting example, a statement that two quantities are "approximately equal" can mean that a ratio between the two quantities is as little as 0.9:1.1 or as much as 1.1:0.9 (or any value therebetween), and a statement that a four-way ratio is "about 5:3: 1: 1" can mean that the first number in the ratio can be any value of at least 4.5 and no more than 5.5, the second number in the ratio can be any value of at least 2.7 and no more than 3.3, and so on.

The term "a" or "an" entity, as used herein, refers to one or more of that entity. As such, the terms "a" (or "an"), "one or more" and "at least one" can be used interchangeably herein.

The use of "including," "comprising," or "having" and variations thereof herein is meant to encompass the items listed thereafter and equivalents thereof as well as additional items. Accordingly, the terms "including," "comprising," or "having" and variations thereof can be used interchangeably herein. The use of "engaged with" and variations thereof herein is meant to encompass any direct or indirect connections between components.

It shall be understood that the term "means" as used herein shall be given its broadest possible interpretation in accordance with 35 U. S. C. § 112(f). Accordingly, a claim incorporating the term "means" shall cover all structures, materials, or acts set forth herein, and all of the equivalents thereof. Further, the structures, materials, or acts and the equivalents thereof shall include all those described in the summary, brief description of the drawings, detailed description, abstract, and claims themselves.

All external references are hereby incorporated by reference in their entirety whether explicitly stated or not.

These and other advantages will be apparent from the disclosure contained herein. The above-described embodiments, objectives, and configurations are neither complete nor exhaustive. The Summary is neither intended nor should it be construed as being representative of the full extent and scope of the present disclosure. Moreover, references made herein to "the present disclosure," or aspects thereof should be understood to mean certain embodiments of the present disclosure and should not necessarily be construed as limiting all embodiments to a particular description. The present disclosure is set forth in various levels of detail in the Summary as well as in the attached drawings and the Detailed Description and no limitation as to the scope of the present disclosure is intended by either the inclusion or non-inclusion of elements, components, etc. in this Summary. Additional aspects of the present disclosure will become more readily apparent from the Detailed Description, particularly when taken together with the drawings.

It is to be appreciated that any embodiment, feature, or aspect described herein can be claimed in combination with any other embodiment(s), feature(s), or aspect(s) as described herein, regardless of whether the features or aspects come from the same described embodiment. For example, any one or more aspects described herein can be combined with any other one or more aspects described herein. In addition, any one or more features described herein can be combined with any other one or more features described herein. Further, any one or more embodiments described herein can be combined with any other one or more embodiments described herein.

### BRIEF DESCRIPTION OF THE DRAWINGS

Those of skill in the art will recognize that the following description is merely illustrative of the principles of the disclosure, which may be applied in various ways to provide many different alternative embodiments. This description is made for illustrating the general principles of the teachings of this disclosure and is not meant to limit the inventive concepts disclosed herein.

The accompanying drawings, which are incorporated in and constitute a part of the specification, illustrate embodiments and together with the general description of the disclosure given above and the detailed description of the drawings given below, serve to explain the principles of the disclosure.
Fig. 1A illustrates a first perspective view of a mounting system for a metal panel, in accordance with one or more embodiments of the present disclosure;
Fig. 1B illustrates a second perspective view of the mounting system of Fig. 1A;
Fig. 1C illustrates a right elevation view of the mounting system of Fig. 1A;
Fig. 1D illustrates a left elevation view of the mounting system of Fig. 1A;
Fig. 1E illustrates a rear elevation view of the mounting system of Fig. 1A;
Fig. 1F illustrates a front elevation view of the mounting system of Fig. 1A;
Fig. 1G illustrates a top plan view of the mounting system of Fig. 1A;
Fig. 2 illustrates a cross-section view taken at line 2-2 in Fig. 1G;
Fig. 3 illustrates a cross-section view taken at line 3-3 in Fig. 1G;
Fig. 4A illustrates a first perspective view of the support bracket of the mounting system of Fig. 1A;
Fig. 4B illustrates a second perspective view of the support bracket of Fig. 4A;
Fig. 4C illustrates a right elevation view of the support bracket of Fig. 4A;
Fig. 4D illustrates a left elevation view of the support bracket of Fig. 4A;
Fig. 4E illustrates a top plan view of the support bracket of Fig. 4A;
Fig. 4F illustrates a perspective view of a variation of the crossmember of Fig. 4A;
Fig. 4G illustrates a right elevation view of the crossmember of Fig. 4F;
Fig. 5A illustrates a first perspective view of the clip of the mounting system of Fig. 1A;
Fig. 5B illustrates a second perspective view of the clip of Fig. 5A;
Fig. 5C illustrates a top plan view of the clip of Fig. 5A;
Fig. 5D illustrates a right elevation view of the clip of Fig. 5A;
Fig. 5E illustrates a left elevation view of the clip of Fig. 5A;
Fig. 5F illustrates a right elevation view of a first variation of the clip of Fig. 5A;
Fig. 5G illustrates a left elevation view of the first variation of the clip of Fig. 5F;
Fig. 5H illustrates a perspective view of a second variation of the clip of Fig. 5A;

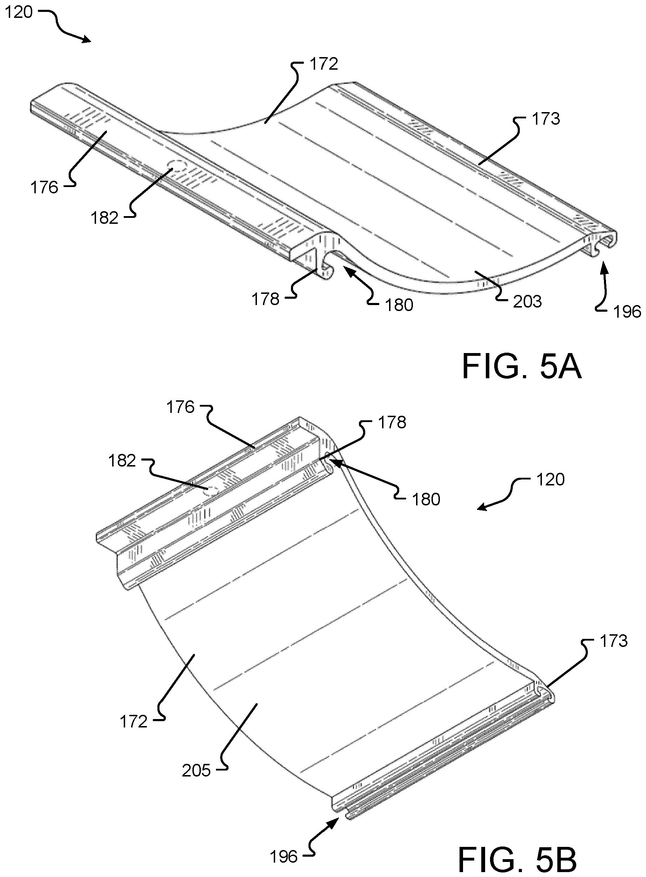

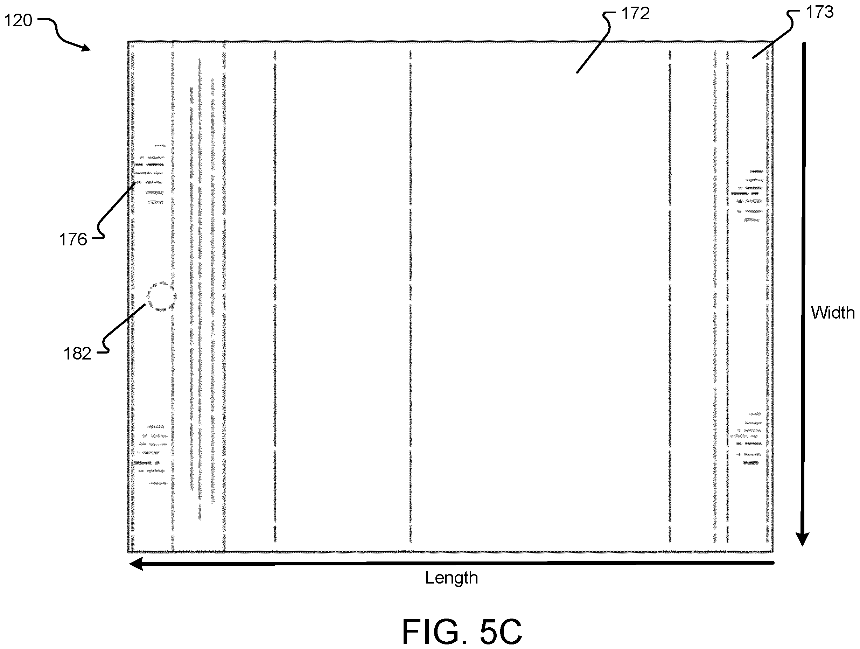

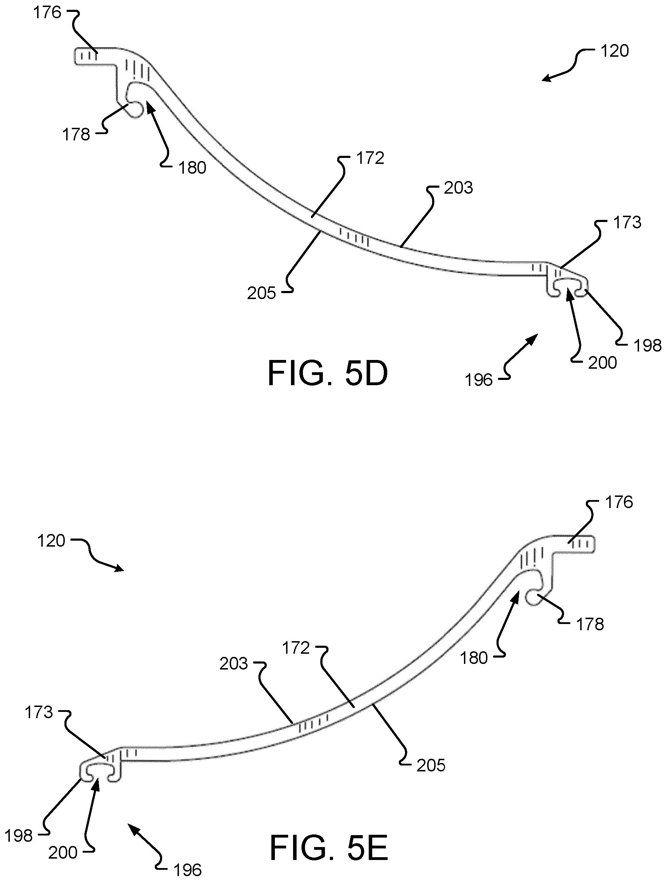

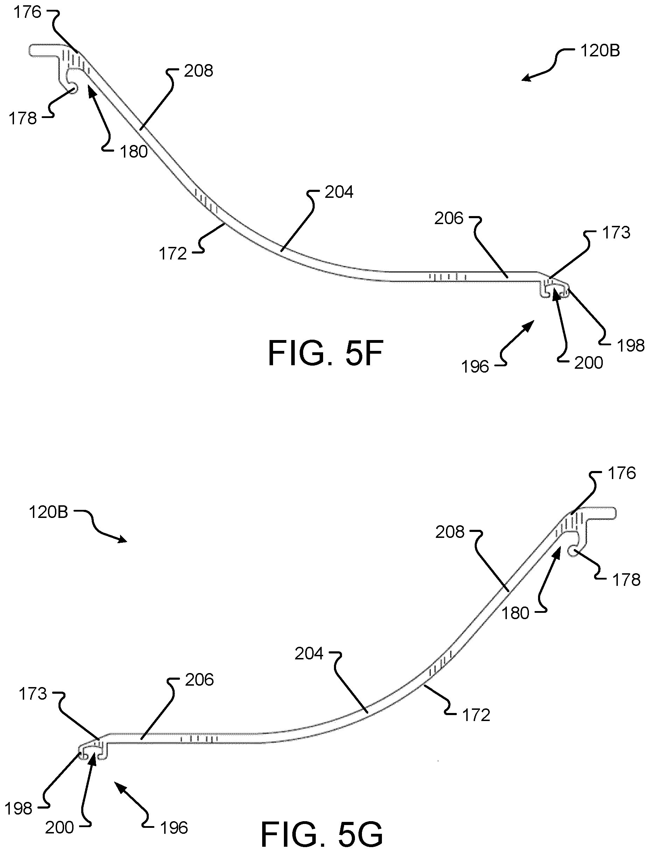

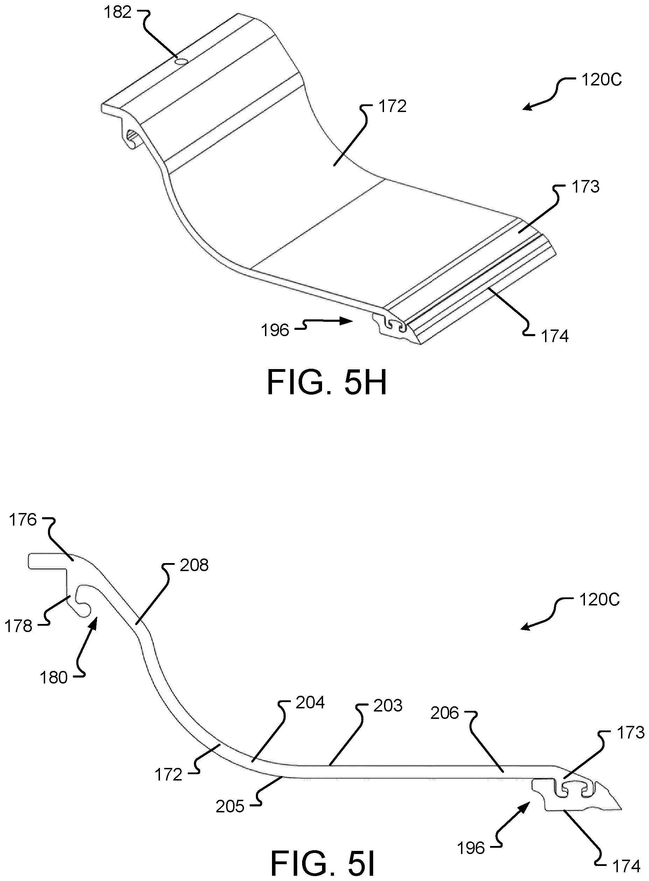

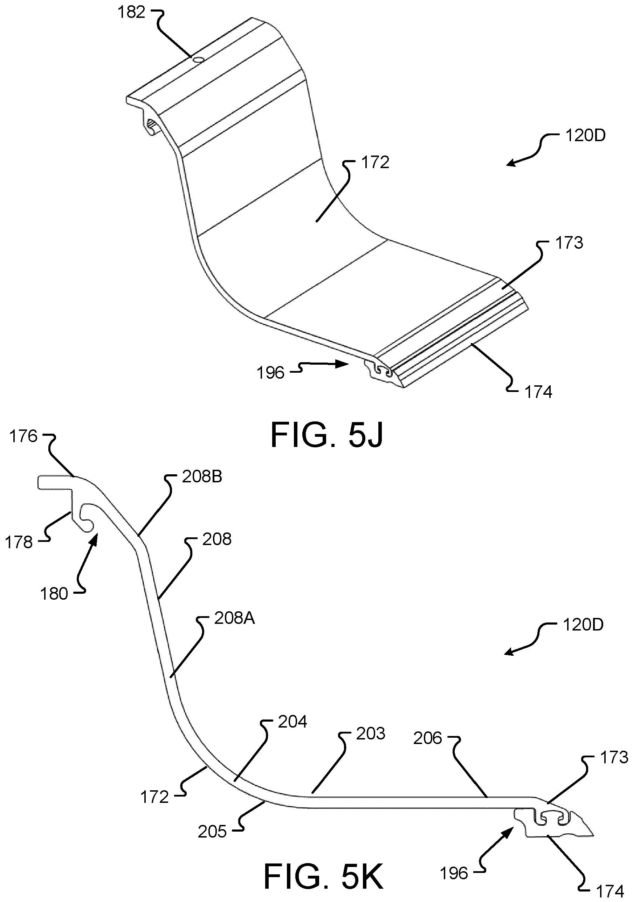

Fig. 5Iillustrates a right elevation view of the second variation of the clip of fig. 5H;
Fig. 5J illustrates a perspective view of a third variation of the clip of Fig. 5A;
Fig. 5K illustrates a right elevation of the third variation of the clip of Fig. 5J;

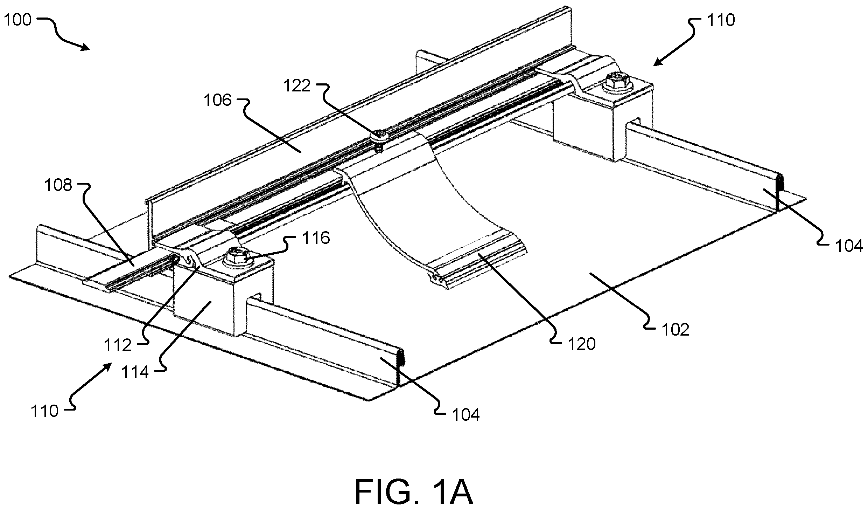

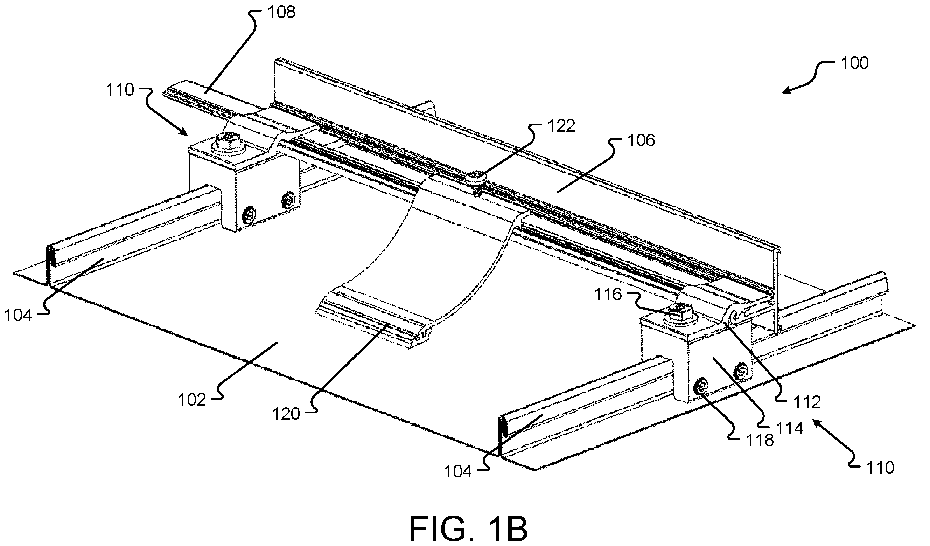

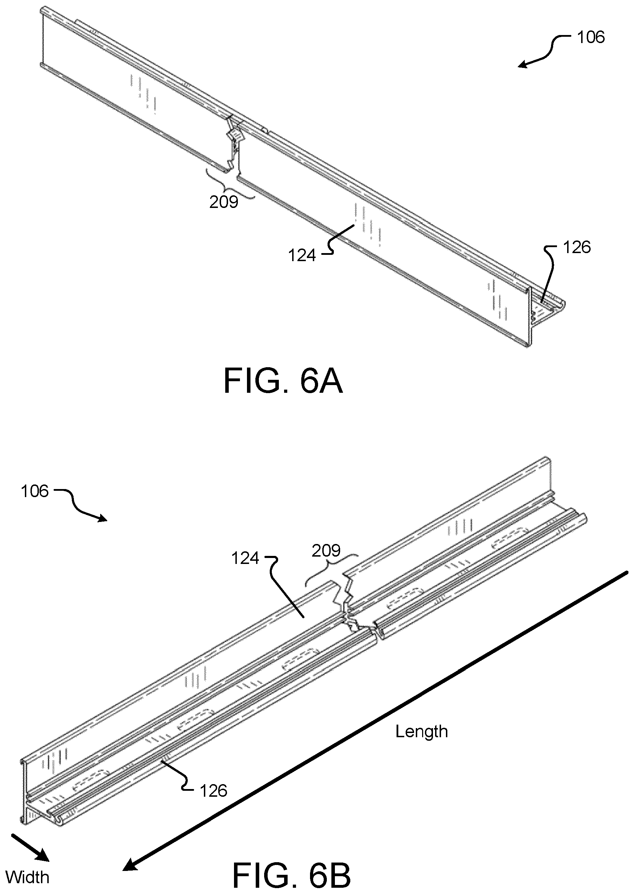

Fig. 6A illustrates a first perspective view of the crossmember of the mounting system of Fig. 1A;
Fig. 6B illustrates a second perspective view of the crossmember of Fig. 6A;

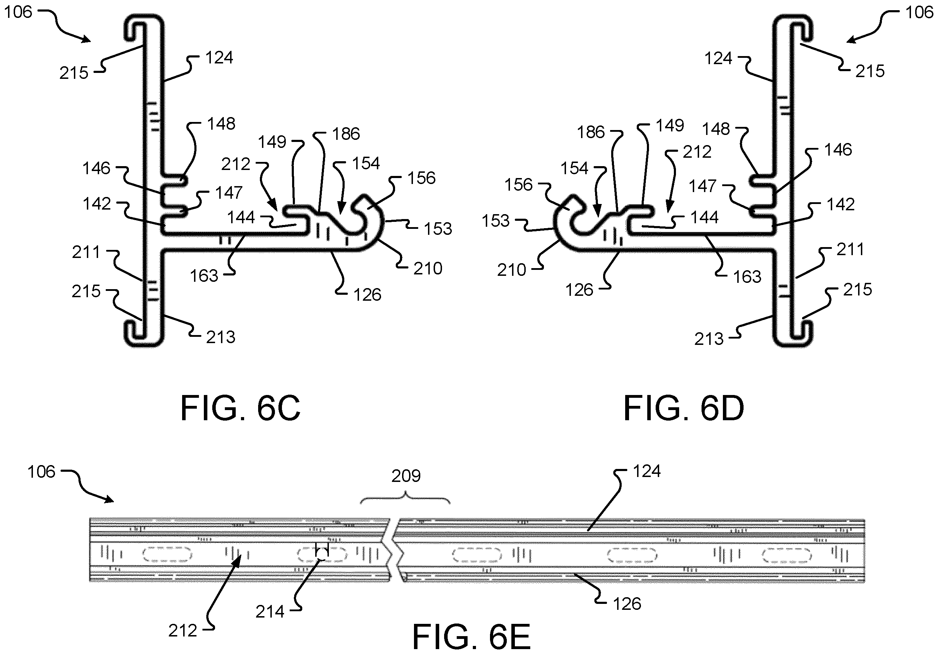

Fig. 6C illustrates a right elevation view of the crossmember of Fig. 6A;
Fig. 6D illustrates a left elevation view of the crossmember of Fig. 6A;
Fig. 6E illustrates a top plan view of the crossmember of Fig. 6A;

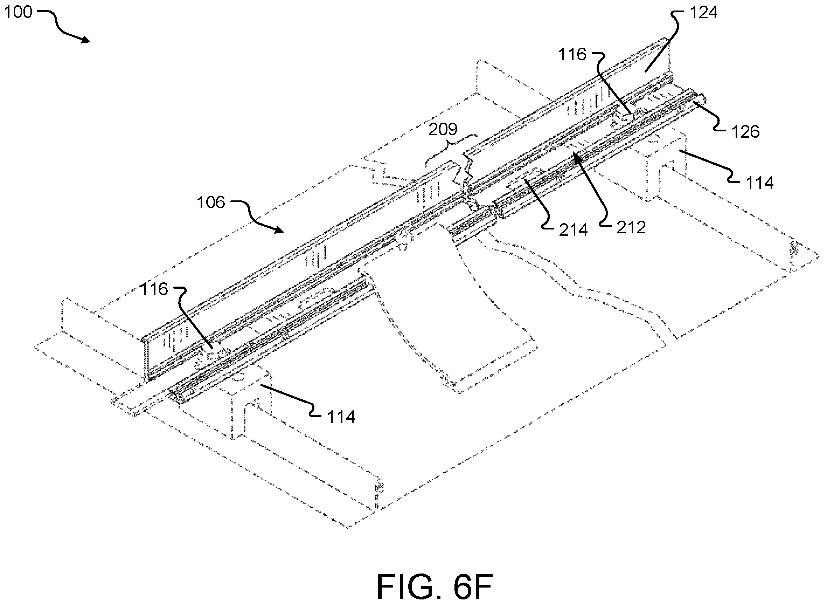

Fig. 6F illustrates a perspective view of the mounting system including the crossmember of Fig. 6A;

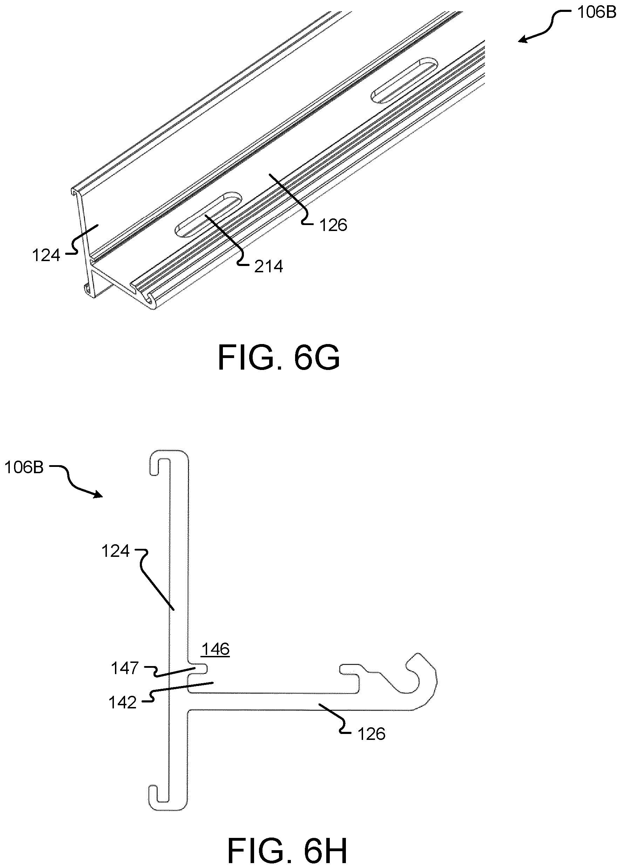

Fig. 6G illustrates a perspective view of a variation of the crossmember of Fig. 6A;
Fig. 6H illustrates a right elevation view of the crossmember of Fig. 6G;

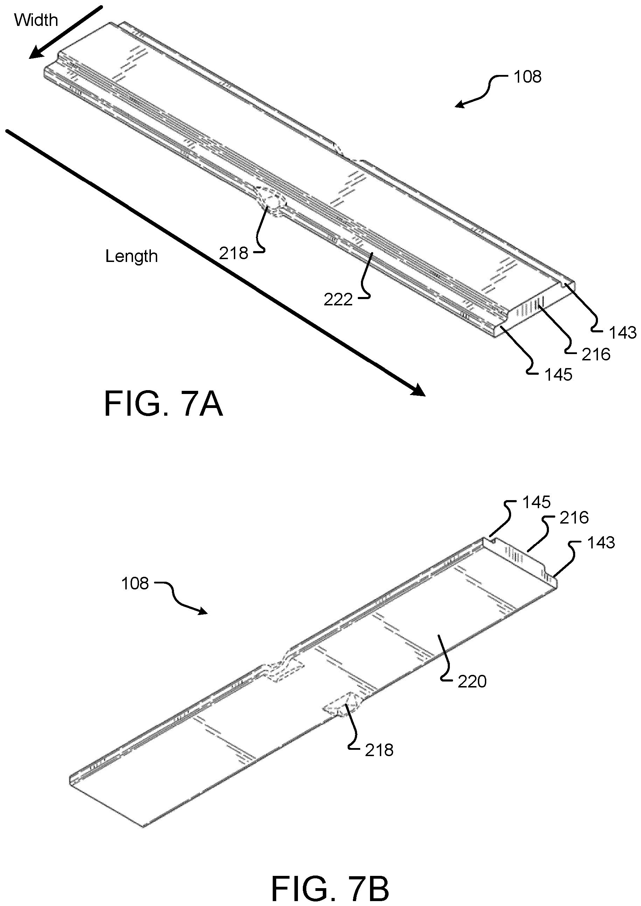

Fig. 7A illustrates a first perspective view of the extension of the mounting system of Fig. 1A;
Fig. 7B illustrates a second perspective view of the extension of Fig. 7A;

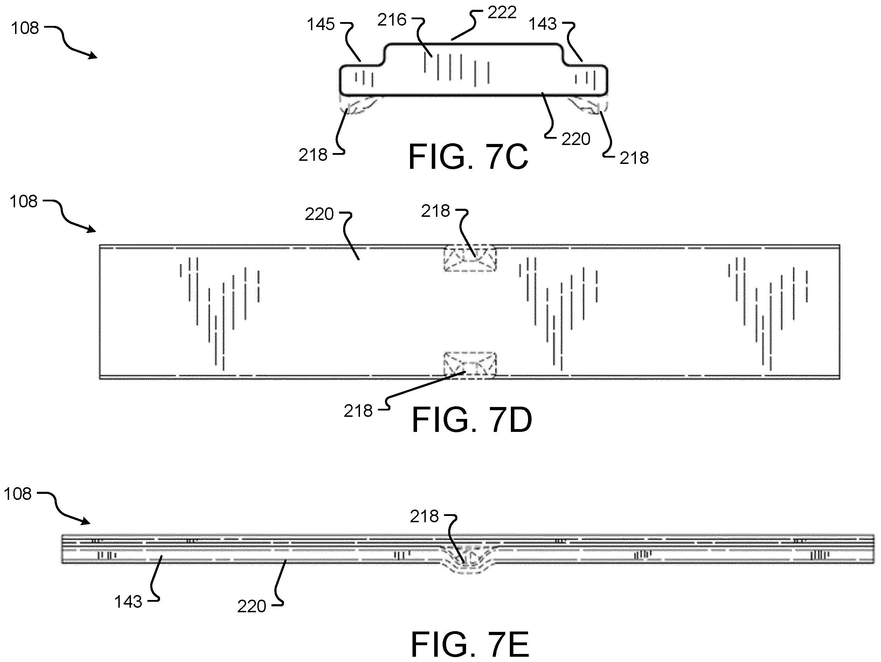

Fig. 7C illustrates a right elevation view of the extension of Fig. 7A;
Fig. 7D illustrates a bottom plan view of the extension of Fig. 7A;
Fig. 7E illustrates a front elevation view of the extension of Fig. 7A;

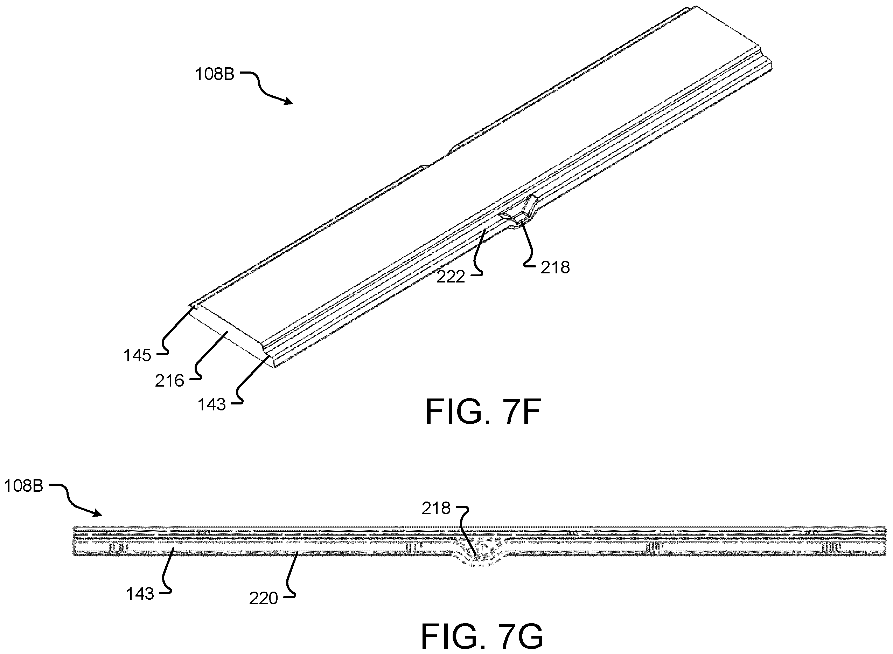

Fig. 7F illustrates a perspective view of a variation of the extension of Fig. 7A;
Fig. 7G illustrates a front elevation view of the extension of Fig. 7F; and

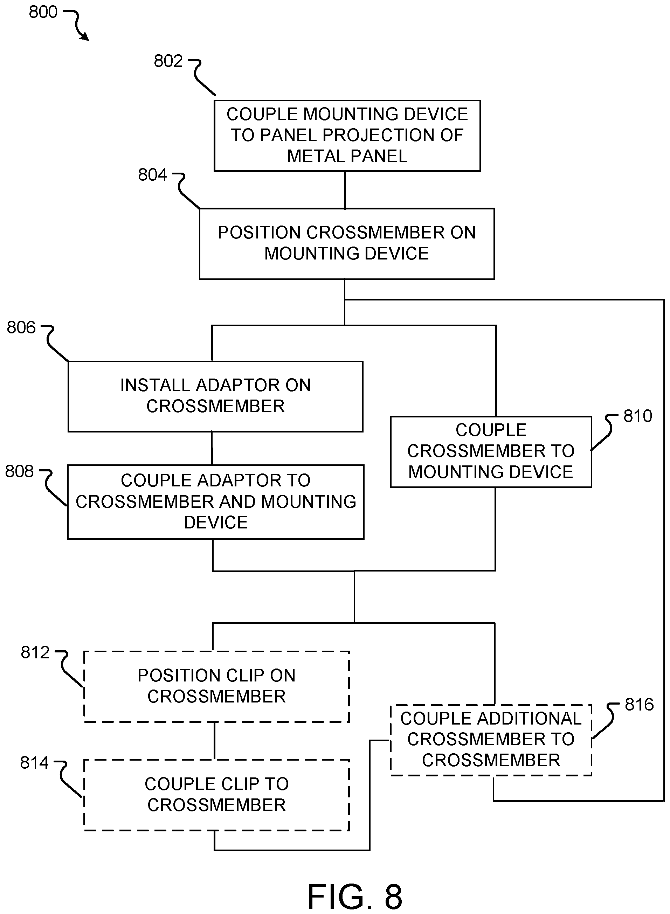

Fig. 8 illustrates a flow diagram of a method or process for installation of the mounting system of Fig. 1A, in accordance with one or more embodiments of the present disclosure.

It should be understood that the drawings are not necessarily to scale, and various dimensions may be altered. In certain instances, details that are not necessary for an understanding of the disclosure or that render other details difficult to perceive may have been omitted. It should be understood, of course, that the disclosure is not necessarily limited to the particular embodiments illustrated herein.

| Reference Number | Component |
|---|---|
| 100 | Mounting System |
| 102 | Metal Panel |
| 104 | Panel Projection or Seam |
| 106, 106B | Crossmember |
| 108 | Extension |
| 110 | Mounting Assembly |
| 112, 112B | Adaptor |
| 114 | Mounting Device |
| 116 | Fastener |
| 118 | Fastener |
| 120, 120B, 120C, 120D | Clip |
| 122 | Fastener |
| 124 | Rail |
| 126 | Support Bracket |
| 128 | Angle |
| 130 | Plane |
| 132 | Height |
| 134 | Projection Edge |
| 136 | Surface |
| 138 | Surface |
| 140 | Surface |
| 142 | First Lower Channel |
| 143 | Protrusion |
| 144 | Second Lower Channel |
| 145 | Protrusion |
| 146 | Upper Channel |
| 147 | Tab |
| 148 | Tab |
| 149 | Tab |
| 150 | Arm |
| 151 | Body |
| 152 | Protrusion |
| 153 | Distal End |
| 154 | Notch |
| 156 | Protrusion |
| 158 | Notch |
| 159 | Proximal End |
| 160 | Surface |
| 161 | Gap |
| 162 | Body |
| 163 | Surface |
| 164 | Leg |
| 166 | Leg |
| 167 | Slot |
| 168 | Aperture |
| 169 | Sidewall |
| 170 | Aperture |
| 171 | Gap |
| 172 | Body |
| 173 | Leg |
| 174 | Foot |
| 175 | Surface |
| 176 | Head |
| 177 | Surface |
| 178 | Protrusion |
| 180 | Notch |
| 182 | Aperture |
| 184 | Distal Tip |
| 186 | Recess |
| 187 | Interlocking Assembly |
| 188 | Leg |
| 189 | Projection |
| 190 | Height |
| 192 | Aperture |
| 193 | Protrusion |
| 194 | Sidewall |
| 195 | Surface |
| 196 | Interlocking Assembly |
| 198 | Protrusion |
| 200 | Notch |
| 202 | Body |
| 203 | Surface |
| 204 | Corner |
| 205 | Surface |
| 206 | Section |
| 208, 208A, 208B | Section |
| 209 | Break Line |
| 210 | Head |
| 211 | Sidewall |
| 212 | Groove |
| 213 | Sidewall |
| 214 | Aperture |
| 215 | Groove |
| 216 | Body |
| 218 | Projection |
| 220 | Lower Surface |
| 222 | Upper Surface |
| 800 | Process Flow |
| 802 | Couple Mounting Device to Panel Projection |
| 804 | Position Crossmember on Mounting Device |
| 806 | Install Adaptor on Crossmember |
| 808 | Couple Adaptor to Crossmember and Mounting Device |
| 810 | Couple Crossmember to Mounting Device |
| 812 | Position Clip on Crossmember |
| 814 | Couple Clip to Crossmember |
| 816 | Couple Additional Crossmember to Crossmember |

### DETAILED DESCRIPTION

Although the following text sets forth a detailed description of numerous different embodiments, it should be understood that the legal scope of the description is defined by the words of the claims set forth at the end of this disclosure. The Detailed Description is to be construed as exemplary only and does not describe every possible embodiment since describing every possible embodiment of the mounting system for a metal panel would be impractical, if not impossible. Numerous alternative embodiments could be implemented, using either current technology or technology developed after the filing date of this patent, which would still fall within the scope of the claims. Additionally, any combination of features shown in the various figures can be used to create additional embodiments of the present disclosure. Thus, dimensions, aspects, and features of one embodiment of the mounting system can be combined with dimensions, aspects, and features of another embodiment of the mounting system to create the claimed embodiment.

In general, embodiments of the present disclosure are directed to a mounting system for a metal panel. The mounting system is less complex and less restrictive in terms of methods of installation, reducing installation time and cost over known mounting systems and methods. The mounting system also includes components that are economical to produce, reducing manufacturing material and time over the known mounting systems and methods. The mounting system includes components that provide increased performance as compared to other known mounting systems and methods.

Further, the mounting system of the present disclosure includes components that are not subject to as strict of tolerances, including in a direction of extrusion (e.g., defined along a length of a crossmember 106 and a mounting device 114, and/or defined along a width of an adaptor 112 or and a clip 120), such that tolerances are less critical to the assembly of the mounting system as compared to known mounting systems and methods. In addition, components of the mounting system of the present disclosure require less material during manufacturing as compared to components of the known mounting systems and methods which are of a similar size.

Embodiments of the present disclosure are directed to a mounting system with a mounting device that is couplable to a panel projection of the metal panel and to a crossmember, either directly via fasteners through the mounting device and the crossmember or indirectly via an adaptor. The adaptor is insertable into the crossmember in a direction other than from an end wall at one end of the crossmember. Rather, the adaptor may be insertable into the crossmember adjacent to (i.e., above) a mounting device while the crossmember is positioned on the mounting device. A fastener through respective apertures in the adaptor and the mounting device secures the adaptor to the mounting device. The adaptor and the support bracket have interlocking features that couple together, such that securing the adaptor to the mounting device via the fastener additionally secures the crossmember to the mounting device via the engagement of the support bracket by the adaptor.

Embodiments of the present disclosure are also directed to a clip that provides additional points of contact between the crossmember and the metal panel. The clip is insertable into the crossmember in a direction other than from an end wall at one end of the crossmember. Rather, the clip may be insertable into the crossmember at any location along the length of the crossmember. A fastener through an aperture in the clip secures the clip to a surface of the support bracket. The clip and the support bracket have interlocking features that couple together, such that engaging the crossmember via the fastener through the aperture of the clip additionally secures the clip to the support bracket via the engagement of the support bracket by the clip.

Embodiments of the present disclosure are further directed to an extension insertable into the crossmember. The extension allows for the coupling of multiple crossmembers together to increase the length (and, in general, the size) of the mounting system, where the multiple crossmembers may each be coupled to respective mounting devices that are coupled to a panel projection of a metal panel, and where the multiple crossmembers optionally include respective adaptors and/or clips.

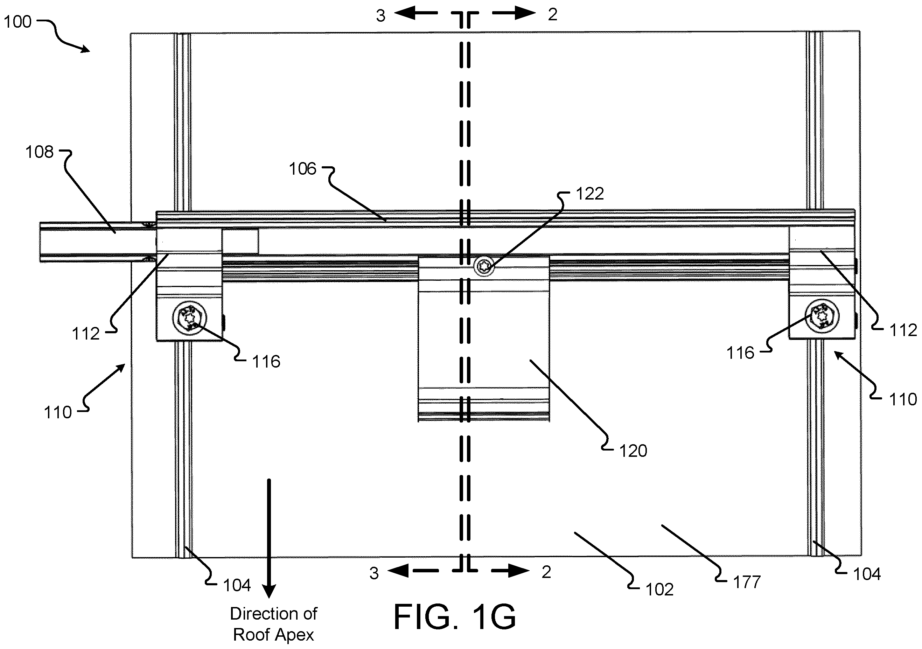

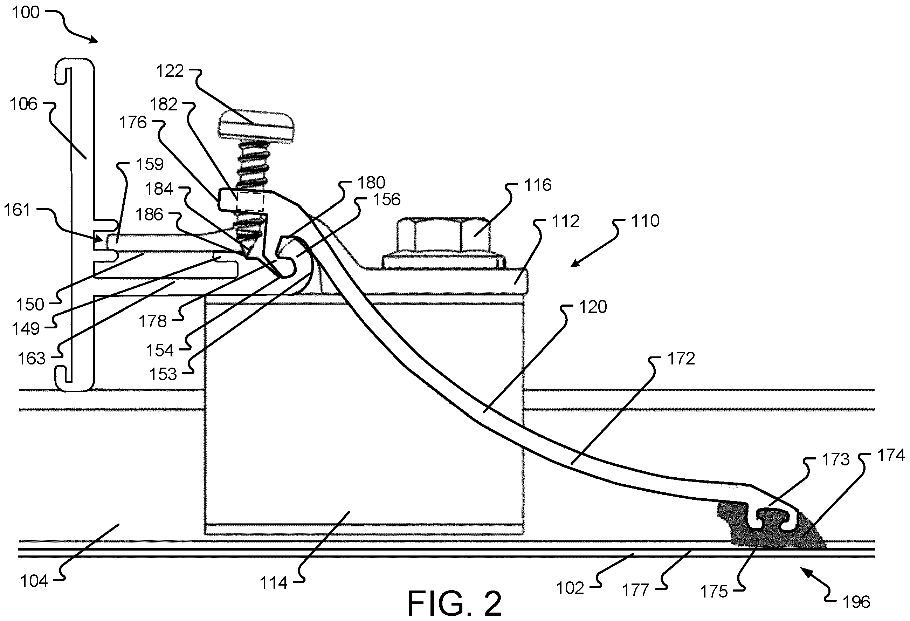

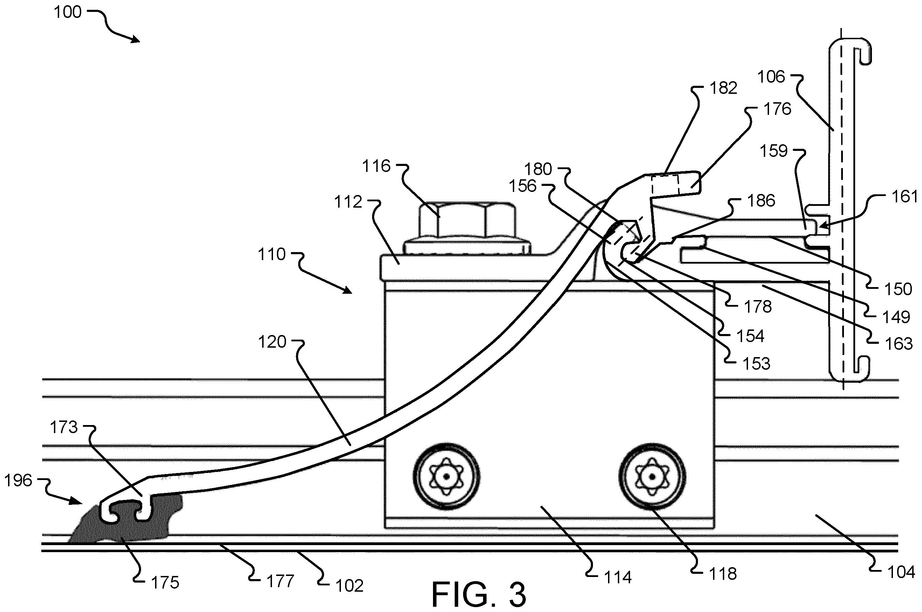

Figs. 1A-1G, 2, and 3 in general illustrate a mounting system 100, in accordance with one or more embodiments of the present disclosure. In particular, Figs. 1A-1G illustrate the mounting system 100, Fig. 2 illustrates a cross-section view of the mounting system 100 at line 2-2 in Fig. 1G, and Fig. 3 illustrates a cross-section view of the mounting system 100 at line 3-3 in Fig. 1G.

The mounting system 100 is capable of coupling to a metal panel 102 including one or more panel projections 104. For example, the one or more panel projections 104 may be a single fold, double fold, snap seam, snap lock, nail strip, batten cap, T-seam, bulb seam, trapezoidal rib or rib having a different cross-section, and the like.

The mounting system 100 includes a crossmember 106. For example, the crossmember 106 may be in one or more sections. Where there are multiple sections of crossmembers 106 (or multiple crossmembers 106 in general), the crossmembers 106 may be coupled together with one or more extensions 108. Although embodiments illustrate the extension 108 positioned within a first end wall of the crossmember 106, it should be understood that the extension 108 may join crossmembers 106 to either end of the crossmember 106 without departing from the scope of the present disclosure.

In embodiments, the crossmember 106 is coupled to the one or more panel projections 104 via a mounting assembly 110. Optionally, the mounting assembly 110 includes an adaptor 112 that engages the crossmember 106. Further, the mounting assembly 110 includes a mounting device 114 that couples to the crossmember 106, either indirectly via the adaptor 112 or directly via a fastener 116. For example, where the mounting assembly includes the adaptor 112, the crossmember 106 is coupled to the adaptor 112, and the adaptor 112 is coupled to the mounting device 114 via the fastener 116. However, it is noted that the crossmember 106 may be coupled directly to the mounting device 114 with the fastener 116 and without the intervening adaptor 112 as generally illustrated in Fig. 6F, without departing from the scope of the present disclosure.

It is noted that a space or gap may exist between the crossmember 106 and the one or more panel projections 104 when the crossmember 106 is attached to the one or more panel projections 104 (either directly, or indirectly where the adaptor 112 is installed in the mounting system 100) via the mounting assembly 110. Alternatively, the crossmember 106 may make contact with the one or more panel projections 104 when the crossmember 106 is attached to the one or more panel projections 104 (either directly, or indirectly where the adaptor 112 is installed in the mounting system 100) via the mounting assembly 110, without departing from the scope of the present disclosure.

In some instances, the mounting device 114 may be secured to the panel projection 104 via one or more fasteners 118. It is noted that the mounting assembly 110 may include a mounting device 114 (and, optionally, an adaptor 112) for each of the panel projections 104, or for only a subset of the panel projection 104, without departing from the scope of the present disclosure. In addition, although embodiments of the present disclosure illustrate the adaptor 112 as being substantially the same width as the mounting device 114, it is noted that the adaptor 112 may have a width less than or greater than a width of the mounting device 114, without departing from the scope of the present disclosure. Further, it is noted that the width of the adaptor 112 may only be a portion of the width of the crossmember 106. For instance, a crossmember that is approximately 8 feet in length may be used across multiple panel projections 104, with a corresponding mounting device 114 (and optional adaptor 112) for some or all of the multiple panel projections 104. Thus, where multiple adaptors 112 are utilized to couple a single crossmember 106 to multiple panel projections 104, the width of each adaptor 112 is less than the length of the crossmember 106.

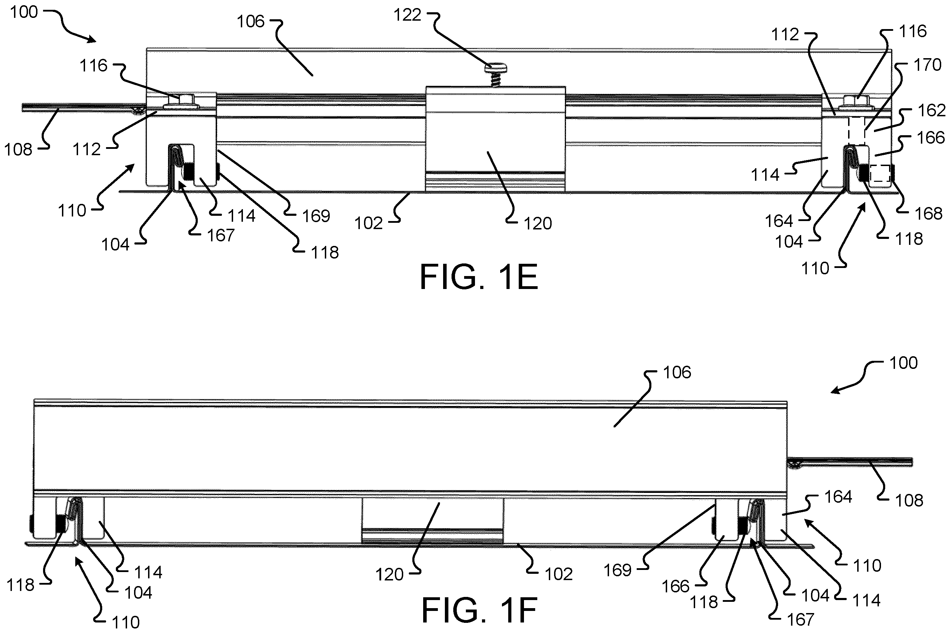

In embodiments, the mounting system 100 includes a clip 120 that is capable of preventing accumulation (i.e., snow, etc.) or debris from sliding downslope between the seams of multiple panel projections 104 and/or underneath the bottom of the crossmember 106 when installed on the metal panel 102. The clip 120 is secured against or to the crossmember 106 via a fastener 122. For example, where the mounting system 100 is positioned on a metal panel 102 that is sloped relative to a ground surface, the clip 120 may be positioned on the high side of the metal panel 102 (i.e., toward the peak or apex of the metal panel 102). For example, Fig. 1E provides a view of the system 100 looking downslope from the peak of the metal panel 102. In contrast, Fig. 1F provides a view of the system 100 from a downslope side looking upslope toward the peak of the metal panel 102. Further, Fig. 1G is labelled to include the direction of roof apex, as the direction relates to the views provided in Figs. 1E and 1F.

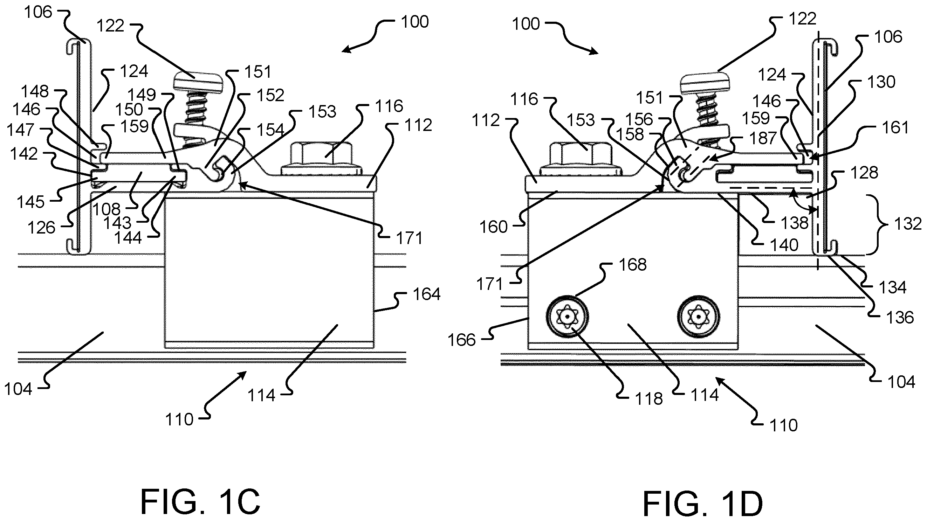

Referring now to Figs. 1C-1D, the crossmember 106 includes a rail 124 and a support bracket 126. For example, the support bracket 126 may extend outward from the rail 124 at an angle 128 that is substantially perpendicular to a plane 130 defined by the rail 124. In addition, the support bracket 126 may be positioned at a height 132 above a projection edge 134 of the panel projection 104 such that a surface 136 of the rail 124 is in contact with the projection edge 134 and a surface 138 of the support bracket 126 is in contact with a surface 140 of the mounting device 114.

The rail 124 includes a first lower channel 142, and the support bracket 126 includes a second lower channel 144 that is complementary to the first lower channel 142. In some embodiments, the channels 142, 144 are configured to receive complementary protrusions 143, 145 of the extension 108. The rail 124 includes a tab 147 that at least partially defines the first lower channel 142, and the support bracket 126 includes a tab 149 that at least partially defines the second lower channel 144.

In some embodiments, the rail 124 additionally includes an upper channel 146 defined at least by the tab 147 extending outward from the rail 124. The upper channel 146 is configured to receive a proximal end 159 of an arm 150 of the adaptor 112.

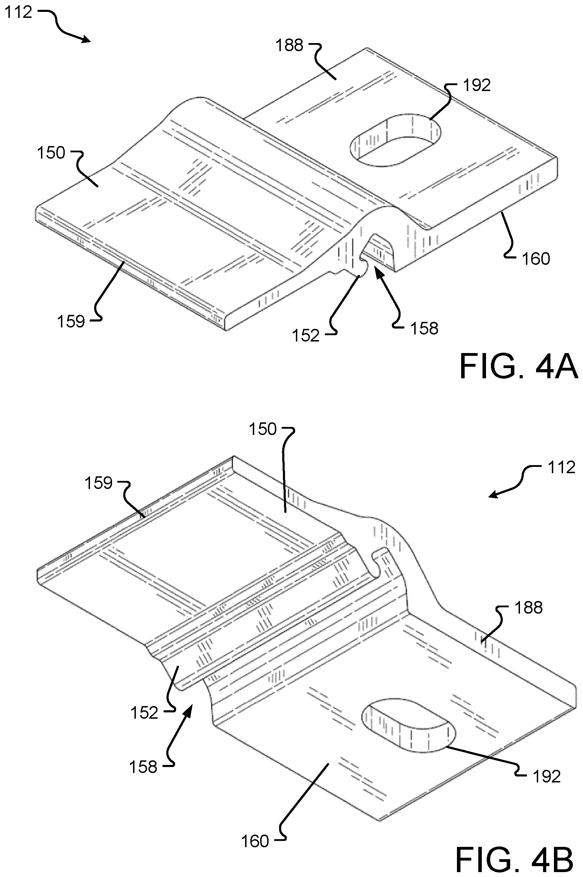

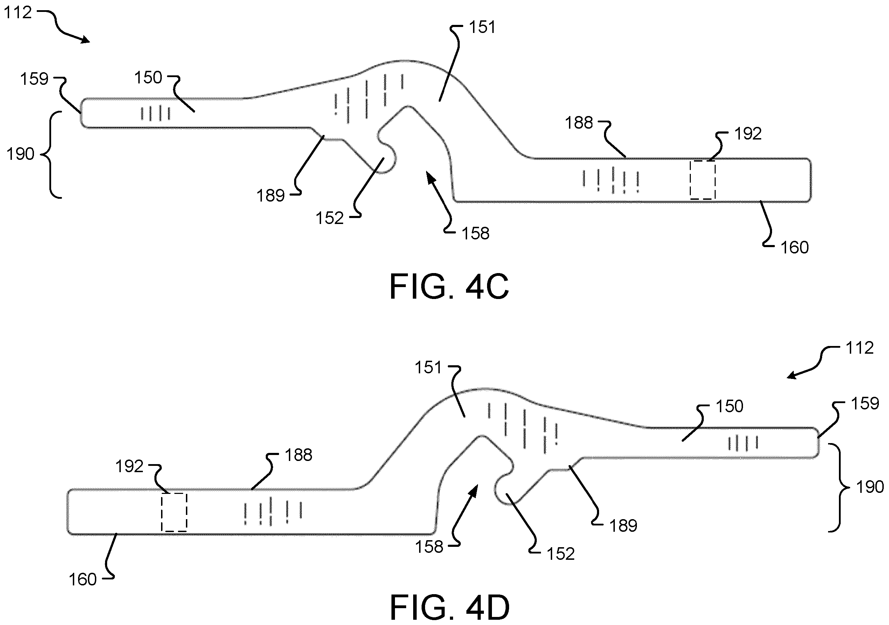

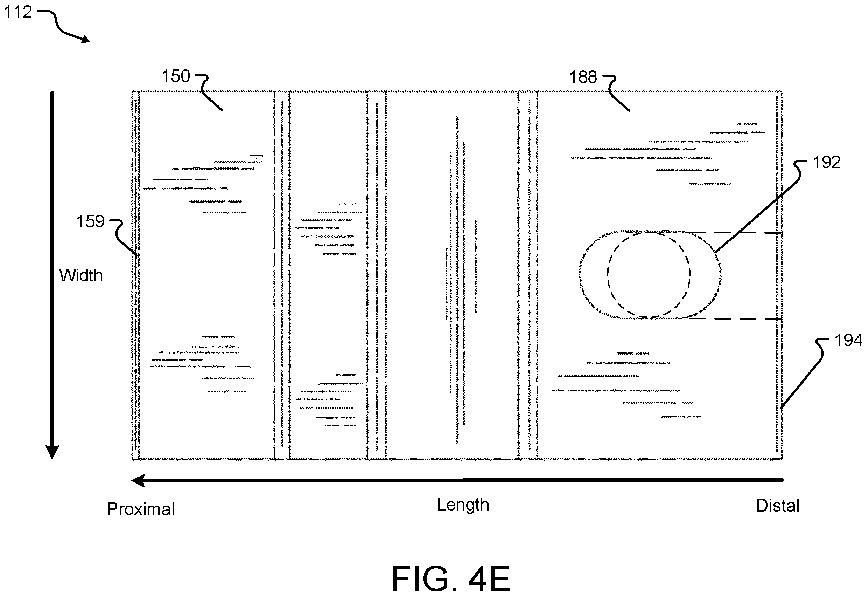

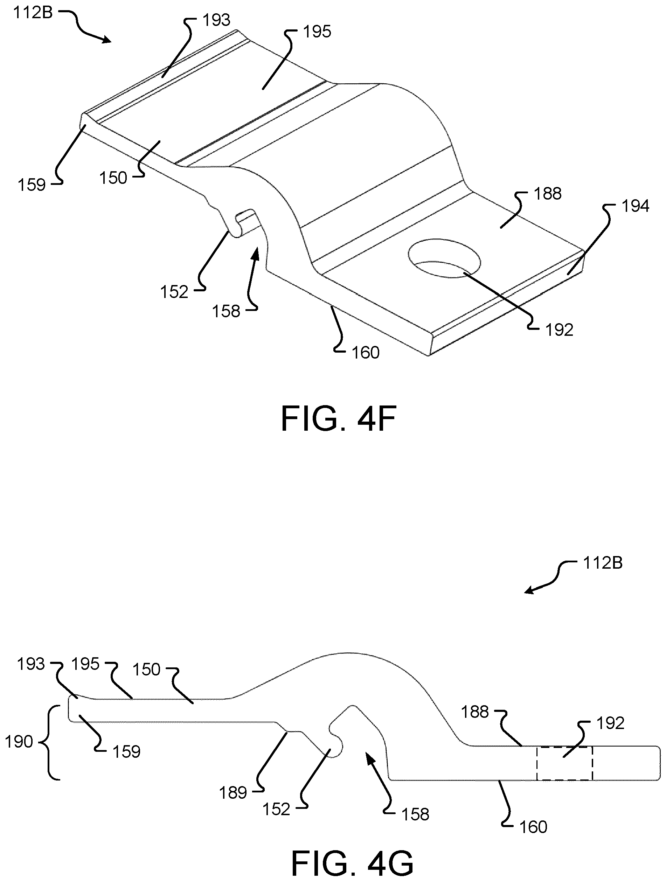

In embodiments, the upper channel 146 and the proximal end 159 of the arm 150 are loosely toleranced with respect to one another, to ensure that the proximal end 159 of the arm 150 is received within the upper channel 146 but still maintains contact with the tab 147 when the adaptor 112 engages the crossmember 106, as described in detail further herein. For example, the looser tolerance may be the result, at least in part, of the proximal end 159 of the arm 150 having a thickness that is less (e.g., in some cases, significantly less) than a height of the upper channel 146, such that the arm 150 does not bind in the upper channel 146. Additionally, or in the alternative, in some embodiments the arm 150 has a length less than a width of the support bracket 126, such that when the adaptor 112 is coupled to the mounting device and the crossmember 106, the proximal end 159 is spaced from an interior surface of the rail 124 to prevent binding between the arm 150 and the rail 124. An illustration of the proximal end 159 of the adaptor 112 is illustrated in Fig. 4E.

It is noted that the upper channel 146 may optionally be bounded by a second tab 148 that extends outward from the sidewall of the rail 124, such as to prevent the inadvertent release of the arm 150 from the upper channel 146 once installed. An example embodiment of a crossmember 106B that does not include the second tab 148 is illustrated in Figs. 6F-6G, as described in detail further herein.

Where the adaptor 112 is used in the mounting assembly 110, installation of the adaptor 112 on the crossmember 106 involves inserting a protrusion 152 of a body 151 of the adaptor 112 into a notch 154 at a distal end 153 of the support bracket 126. The distal end 153 of the support bracket 126 curls around the protrusion 152 to form the notch 154, such that the distal end 153 of the support bracket 126 also includes a protrusion 156 that is insertable into a notch 158 within the body 151 of the adaptor 112. The notch 158 of the adaptor 112 is thus curled around the protrusion 156 of the support bracket 126. Due to the curled configuration of the notch 158, the adaptor 112 includes an adaptor surface 160 that makes contact with the surface 140 of the mounting device 114.

It is noted that the channels 142, 144 and the extension 108 are toleranced to prevent unintended or inadvertent movement of the extension 108 within the channels 142, 144 (i.e., by wind, precipitation, shifting of components within the mounting system 100 and/or coupled to the mounting system 100, or the like). In some configurations, the extension 108 has a total height that is equal to or less than the height of the first lower channel 142 and a thickness of the tab 147, to prevent interference with the arm 150 of the adaptor 112 engaging with the upper channel 146. In this manner, when the mounting system 100 is assembled as generally illustrated in Fig. 1C, the extension 108 may be retained in a groove 212 between the arm 150 of the adaptor 112 and the support bracket 126 (i.e., the groove 212 being illustrated in Figs. 6C-6F).

In addition, it is noted that the upper channel 146 and the arm 150 may be toleranced to allow for installation and coupling of the adaptor 112 on the crossmember 106 and/or adjustment of the adaptor 112 on the mounting device 114. For example, the proximal end 159 of the arm 150 may be inserted into the upper channel 146 in a direction originating from the distal end 153 of the support bracket 126, and the respective sets of protrusions and notches 152 / 154 and 156 / 158 may be engaged by adjusting the adaptor 112 about the distal end 153 of the support bracket 126, prior to insertion of the fastener 116 into an aperture 192 of the adaptor 112 and into an aperture 170 of the mounting device 114. Notably, there is a spacing or gap 161 between the proximal end 159 of the arm 150 and an interior surface of the rail 124 within the upper channel 146, caused in part by the looser tolerancing of the upper channel 146 and the proximal end 159 of the arm 150 as described previously herein. In addition, the arm 150 is positioned on the tab 147 and spaced above a surface 163 of the support bracket 126, to allow for the possible insertion of the extension 108 within the first lower channel 142 and the second lower channel 144.

In this regard, the interlocking of the adaptor 112 to the crossmember 106 is much simpler and less complex than known mounting systems and methods. In particular, the corresponding interlocking features 152 / 154 of the adaptor 112 and the support bracket 126, and additionally the corresponding interlocking features 156 / 158 of the adaptor 112 and the support bracket 126, result in a partial C-shape interlocking assembly on the support bracket 126 that faces toward the rail 124 (i.e., as compared to a full C interlocking assembly configuration of the beaded portion that faces away from the panel support member of the mounting adaptor of U.S. Patent No. 6,470,629 described above). For purposes of the present disclosure, the partial C-shape interlocking assembly of the present application is understood to contour to conform to an arc that is no greater than (i.e., less than or equal to) 180 degrees, while the full C interlocking assembly configuration of U.S. Patent No. 6, 470,629 is understood to contour to conform to an arc that is greater than 200 degrees.

In addition, the gap 161 between the proximal end 159 of the arm 150 of the adaptor 112 and the upper channel 146 of the rail 124 of the crossmember 106 does not include interlocking features that limit insertion of the adaptor 112 to a direction from an end wall of the crossmember 106 (i.e., does not include the interlocking toe and groove of the alignment portion of the mounting adaptor of U.S. Patent No. 6,470,629). These improvements allow for the installation of the adaptor 112 on the crossmember 106 to be completed at the same time with the alignment of the adaptor 112 to the mounting device 114 and/or the panel projection 104 (i.e., where the mounting device 114 is pre-coupled to the adaptor 112 via the fastener 116), as compared to needing multiple installation steps both on a ground surface and on the metal panel, thus reducing installation time, cost, and complexity.

Use of a partial C-shape interlocking assembly for engagement of the adaptor 112 to the support bracket 126 of the crossmember 106, and the more loosely-toleranced engagement between the arm 150 of the adaptor 112 and the rail 124 of the crossmember 106, results in components of the mounting system 100 that are not subject to as strict of tolerances including in a direction of extrusion (e.g., defined along the length of the crossmember 106 and the mounting device 114, and/or defined along the width of the adaptor 112 or and the clip 120) in the mounting system 100. As such, tolerances are less critical to the assembly of the mounting system 100 as compared to known mounting systems and methods such as those in U.S. Patent No. 6,470,629. Notably, as the components of the known mounting systems and methods such as those in U.S. Patent No. 6, 470,629 must be slid the length of the crossmember from a particular end of the crossmember, variances in tolerances of those components may reduce ease of sliding (or, in some cases, prohibit sliding entirely). In contrast, the adaptor 112 of the mounting system 100 of the present disclosure may be installed at any point along the length of the crossmember 106, reducing a possible reliance on tolerancing of the crossmember 106 (and the adaptor 112).

In addition, it should be understood that the use of the extension 108 provides an improvement over known systems and methods such as those in U.S. Patent No. 6,470,629 described above, which utilizes an adaptor to both secure a crossmember to a mounting device and to splice multiple crossmembers together. Notably, using an adaptor for both functions, as done in known systems and methods such as those in U.S. Patent No. 6,470,629, requires modifying of the adaptor being used for splicing during installation to prevent interference with other components (e.g., other adaptors). In contrast, the stacked configuration of the extension 108 and the arm 150 of the adaptor 112 within the crossmember 106, as illustrated in Figs. 1C and 1D, does not require modification of any components during installation to prevent interference. In addition, the arm 150 of the adaptor 112 may make contact and be further supported by the extension 108, such as where the extension 108 has an upper surface that is substantially flush with upper surfaces of the tabs 147, 149 on which the arm 150 is also positioned.

It is noted, however, the arm 150 is not precluded from being inserted into the upper channel 146, and the respective sets of protrusions and notches 152 / 154 and 156 / 158 are not precluded from being coupled together, by sliding the adaptor 112 into the crossmember 106 prior to insertion of the fastener 116 into the adaptor 112 and into the mounting device 114. As such, the present disclosure should be understood as being directed to multiple improved, interchangeable ways in which the adaptor 112 may be coupled to the support bracket 126 of the crossmember 106.

Referring now to Figs. 1E-1F, in embodiments where the mounting device 114 is utilized in the mounting assembly 110, the mounting device 114 engages the panel projection 104 to hold the mounting system 100 in place on the metal panel 102. The mounting device 114 includes a body 162 with a first leg 164 and a second leg 166 opposite the first leg 164. A slot 167 is defined between interior surfaces of the first leg 164, the second leg 166, and the body 162.

The one or more fasteners 118 pass through corresponding apertures 168 within a sidewall 169 of the second leg 166. In addition, the one or more fasteners 116 that couple the adaptor 112 to the mounting device 114 pass through corresponding apertures 170 within the body 162 of the mounting device 114. It should be understood that the present disclosure is not limited to the configuration or design of the mounting device 114 as illustrated in the figures, but instead may be usable with any mounting device 114 that is able to couple to a panel projection 104 to receive a fastener 116 through an aperture 170 that is positioned in a top surface of the mounting device 114.

Referring now to Figs. 1G, 2, and 3, the clip 120 includes a body 172 and a foot 174. For example, the body 172 and the foot 174 may be separate components that are joined together via an interlocking assembly 196 prior to installation in the mounting system 100. For instance, the body 172 may be fabricated from a first material (i.e., a metal), while the foot 174 may be fabricated from a second material (i.e., a rubber or plastic). In general, the foot 174 may be fabricated from a material that is contoured to conform to a surface of the metal panel 102, and/or include a surface 175 on the bottom of the foot 174 that is deformable to a surface 177 of the metal panel 102 following the application of a force to the clip 120.

In embodiments where the clip 120 is positioned upslope from the crossmember 106 (e.g., on a sloped roof surface, where the clip 120 is positioned toward the apex or peak of the roof relative to the crossmember 106), the clip 120 may be contoured to conform to a concave arc. The concavity of the arc assists in keeping the clip 120 in place to prevent accumulation (i.e., snow, etc.) or debris from interfering with the positioning of the crossmember 106 on the metal panel 102. It is noted, however, that the clip 120 may be substantially-evenly sloped or may be convex, without departing from the scope of the present disclosure.

The clip 120 includes a head 176 coupled to (or integrally formed with) the body 172. The head 176 is able to engage the crossmember 106, and includes a protrusion 178 that is able to engage the notch 154 of the support bracket 126. The head 176 additionally includes a notch 180 that is able to receive the protrusion 156 at the distal end 153 of the support bracket 126.

The head 176 further includes an aperture 182, through which the fastener 122 is inserted. In some configurations, the aperture 182 is pre-manufactured in the head 176 prior to installation. In other configurations, the aperture 182 is formed with the insertion of the fastener 122 into the head 176 (e.g., during installation of a fastener 122 that is a self-drilling or self-tapping fastener). The fastener 122 includes a distal tip 184 that engages a recess 186 (e.g., as illustrated in Fig. 2) within or proximate to the tab 149 on the support bracket 126. Making contact between the distal tip 184 and the recess 186 and tightening the fastener 122 increases the distance between the head 176 and the recess 186, which secures the protrusion 178 of the clip 120 within the notch 154 of the support bracket 126, and secures at least a portion of the support bracket 126 in a spacing or gap 171 between the adaptor 112 and the mounting device 114 such that the protrusion 156 of the support bracket 126 remains seated within the notch 180 of the clip 120. In addition, tightening the fastener 122 secures the foot 174 of the clip 120 in place against the metal panel 102. More specifically, as the fastener 122 is tightened, a shaft of the fastener 122 is driven through the aperture 182, and both the foot 174 and the head 176 rotate clockwise around the protrusion 178 (when viewed from the perspective of Fig. 2). As such, the fastener 122 does not engage the notch 154 of the support bracket 126 and, in general, does not breach any surface or plane to enter the notch 154 of the support bracket 126. In addition, the fastener 122 does not engage the protrusion 156 of the support bracket 126, but rather engages a portion of the support bracket 126 closer to the rail 124 of the crossmember 106 as compared to the protrusion 156.

In this regard, the interlocking of the clip 120 to the crossmember 106 is a simpler and less complex process than for assembling known mounting systems and methods, similar to the interlocking of the adaptor 112 to the crossmember 106. The corresponding interlocking features 154 / 178 of the support bracket 126 and the clip 120, and additionally the corresponding interlocking features 156 / 180 of the support bracket 126 and the clip 120, result in a partial C-shape interlocking assembly that faces toward the support bracket 126 (i.e., as compared to the full C interlocking assembly configuration of the beaded portion that faces away from the panel support member of the mounting adaptor of U.S. Patent No. 6,470,629). Again, for purposes of the present disclosure, the partial C-shape interlocking assembly of the present application is understood to contour to conform to an arc that is no greater than (i.e., less than or equal to) 180 degrees, while the full C configuration of U.S. Patent No. 6, 470,629 is understood to contour to conform to an arc that is greater than 200 degrees.

Use of a partial C-shape interlocking assembly for engagement of the clip 120 to the support bracket 126 of the crossmember 106, results in components that are not subject to as strict of tolerances including in a direction of extrusion (e.g., defined along the length of the crossmember 106 and the mounting device 114, and/or defined along the width of the adaptor 112 or and the clip 120) in the mounting system 100. As such, tolerances are less critical to the assembly of the mounting system 100 as compared to known mounting systems and methods such as those in U.S. Patent No. 6, 470,629. Notably, as the components of the known mounting systems and methods such as those in US. Patent No. 6,470,629 must be slid the length of the crossmember from a particular end of the crossmember, variances in tolerance of those components may reduce ease of sliding (or, in some cases, prohibit sliding entirely). In contrast, the clip 120 of the mounting system 100 of the present disclosure may be installed at any point along the length of the crossmember 106, reducing a possible reliance on tolerancing of the crossmember 106 (and the clip 120).

These improvements allow for the interlocking of the clip 120 to the crossmember 106 to be completed at the same time with the alignment of the clip 120 on the metal panel 102, as compared to multiple steps both on a ground surface and on the metal panel, reducing installation time, cost, and complexity.

In addition, the location of the fastener 122, in combination with the direction and design of the corresponding interlocking features 154 / 178 of the support bracket 126 and the clip 120, and additionally the corresponding interlocking features 156 / 180 of the support bracket 126 and the clip 120, reduces the need for maintenance as compared to known mounting systems. This results in a more robust system that provides an increased level of performance as compared to known systems.

Figs. 4A-4G further illustrate the adaptor 112 of the mounting system 100, according to one or more embodiments of the present disclosure. It should be understood that the description of the adaptor 112 provided with respect to Figs. 1A-3 is similarly applicable to the adaptor 112 illustrated in Figs. 4A-4G, and vice versa, without departing from the scope of the present disclosure.

Referring now to Figs. 4A-4E, the adaptor 112 illustrated in Figs. 1A-3 is further defined. The adaptor 112 includes the arm 150 that is coupled to (or integrally formed with) the body 151. The adaptor 112 additionally includes a leg 188 that is coupled to (or integrally formed with) the body 151. Due to the configuration of the support bracket 126 of the crossmember 106 and the mounting device 114 within the mounting system 100, in some embodiments the arm 150 may be a select height 190 from the surface 160 of the leg 188 (i.e., with respect to a metal panel 102). It is noted that Fig. 4E illustrates the width of the adaptor 112 (e.g., the direction of extrusion), and additionally the proximal and distal ends along the length of the adaptor 112.

The mounting system 100 includes an interlocking assembly 187 between the adaptor 112 and the crossmember 106. For example, the body 151 (or the arm 150) includes a projection 189 that engages the recess 186 on the support bracket 126 of the crossmember 106 (e.g., as illustrated in Figs. 6C-6D). It should be understood that Figs. 1A-3 (e.g., as labelled in Fig. 1D) illustrate the engagement of the projection 189 with the recess 186 on the support bracket 126 as the interlocking assembly 187.

To counter the looser tolerances between the arm 150 of the adaptor 112 and the upper channel 146 of the crossmember 106, the interlocking assembly 187 (i.e., engagement between recess 186 and projection 189) provides an additional guide during installation of the adaptor 112 onto the crossmember 106 to increase the possibility of correct positioning of the arm 150 within the upper channel 146 of the crossmember 106. In this regard, the possible reduction of functionality that may be lost with the relaxing of tolerances between the adaptor 112 and the crossmember 106 is addressed, while retaining the improvement over known systems and methods afforded with the relaxation of the tolerances of the various components.

The leg 188 includes one or more apertures 192, through each of which a shaft of a fastener 116 is insertable to couple the adaptor 112 to the mounting device 114. As illustrated in Fig. 4E, the apertures 192 may be circular, oval or elliptical, a slot that extends to a sidewall 194 of the adaptor 112, or another shape without departing from the scope of the present disclosure.

Referring now to Figs. 4F-4G, a variation of the adaptor 112 in Figs. 4A-4E (and thus Figs. 1A-3) is illustrated. In the adaptor 112B of Figs. 4F-4G, the proximal end 159 of the arm 150 includes an additional protrusion 193. For example, the protrusion 193 extends upwards from a surface 195 of the arm 150.

It is noted, however, that other disclosure related to the adaptor 112 is applicable to the adaptor 112B, without departing from the scope of the present disclosure, such that the adaptor 112 and the adaptor 112B should generally be understood as being interchangeable within the mounting system 100.

For example, the general configuration of the leg 188 of the adaptor 112 should be understood as being similarly applicable to the adaptor 112B. By way of another example, although not shown, the aperture 192 may be circular, oval or elliptical, a slot that extends to a sidewall 194 of the leg 188, or another shape without departing from the scope of the present disclosure. Further, the protrusion 152 / notch 158 of the adaptor 112, and the various portions of the adaptor 112 that define the protrusion 152 / notch 158, should be understood as being similarly applicable to the adaptor 112B (including with respect to the interlocking of the adaptor 112 to the crossmember 106, although not shown). Further still, the projection 189 for the interlocking assembly 187 should be understood as being included on the adaptor 112B. Further still, the arm 150 may be a select height 190 from the surface 160 of the leg 188 (i.e., with respect to a metal panel 102).

Figs. 5A-5K further illustrate the clip 120 of the mounting system 100, according to one or more embodiments of the present disclosure. It should be understood that the description of the clip 120 provided with respect to Figs. 1A-3 is similarly applicable to the clip 120 illustrated in Figs. 5A-5K, and vice versa, without departing from the scope of the present disclosure.

Figs. 5A-5E generally illustrate the clip 120 of Figs. 1A-3. However, Figs. 5F-5G illustrates a first variation of the clip 120B, Figs. 5H-5I illustrate a second variation of the clip 120C, and Figs. 5J-5K illustrate a third variation of the clip 120D.

The clips 120, 120B, 120C, 120D includes the body 172, which is coupled to (or integrally formed with) the head 176 and/or the leg 173. The body 172 includes a first or upper surface 203, and a second or lower surface 205. It is noted that Fig. 5C illustrates the width of the clip 120 (e.g., the direction of extrusion) and the length of the clip 120.

Disclosure related to the clip 120 in Figs. 5A-5E is applicable to the clips 120B, 120C, 120D in Figs. 5F-5K, respectively, without departing from the scope of the present disclosure, such that the clip 120 and the clips 120B, 120C, 120D should generally be understood as being interchangeable within the mounting system 100. For example, the general configuration of the foot 174 and/or the head 176 of the clip 120 should be understood as being similarly applicable to the clips 120B, 120C, 120D.

For instance, although not shown in Figs. 5D-5E but as shown in Figs. 5H-5K, the aperture 182 may be pre-manufactured in the head 176 or may be formed with the insertion of a fastener 122.

In addition, the protrusion 178 that forms the notch 180 and that engages with the notch 154 and protrusion 156 of the crossmember 106, and the various portions of the clip 120 that define the protrusion 178 and the notch 180, should be understood as being similarly applicable to the clip 120B, 120C, 120D.

Further, although not shown in Figs. 5A-5G, but as shown in Figs. 5H-5K, it should be understood that the clip 120 illustrated in Figs. 5A-5G may include the foot 174 as illustrated in Figs. 1A-3. For example, the leg 173 of the clip 120 and the foot 174 are coupled together via the interlocking assembly 196 including one or more protrusions 198 and/or notches 200 on each of the leg 173 and the foot 174. It is noted that the foot 174 may be inserted into the leg 173 from a bottom surface or from a side surface of the leg 173 of the clip 120. The protrusions 198 and the notches 200 of the interlocking assembly 196 on the clip 120 are illustrated in Figs. 5A-5G.

In each of the variations of the clip 120B of Figs. 5F-5G, the clip 120C of Figs. 5H-5I, and the clip 120D of Figs. 5J-5K, respectively, the arc to which the body 172 may be contoured to conform differs from the arc of the body 172 of the clip 120 in Figs. 5A-5E (and thus Figs. 1A-3). For example, Figs. 5D-5E illustrate a body 172 with a corner 204 that is contoured to conform to an arc with a substantially constant radius between the leg 173 and the head 176. By way of another example, Figs. 5F-5G, Figs. 5H-5I, and Figs. 5J-5K each illustrate a body 172 contoured to conform to a corner 204 between straight sections 206, 208 that respectively transition into the leg 173 and the head 176.

For instance, Figs. 5F-5G illustrate an arc that transitions smoothly (i.e., without change of slope of the surface 203 and/or the surface 205) between the section 206, the corner 204, and the section 208.

In addition, Figs. 5H-5I illustrate an arc that transitions smoothly (i.e., without change of slope of the surface 203 and/or the surface 205) between the section 206 and the corner 204, but which has a change of slope of the surface 203 and/or the surface 205 at the transition between the corner 204 and the section 208.

Further, Figs. 5J-5K illustrate an arc that transitions smoothly (i.e., without change of slope of the surface 203 and/or the surface 205) between the section 206 and the corner 204 and between the corner 204 and a first portion 208A of the section 208, but which has a change of slope of the surface 203 and/or the surface 205 at the transition between the first portion 208A and a second portion 208B of the section 208.

It is noted that the present application is not limited to the variations in Figs. 5D-5E, 5F-5G, 5H-5I, and 5J-5K for the clip 120. Rather, the clip 120 may include any number of corners 204, sections 206, and/or sections 208 that connect the head 176 and/or the leg 173, with any number of transition points between the corners 204, sections 206, and/or sections 208, without departing from the scope of the present disclosure.

Figs. 6A-6H further illustrate the crossmember 106 of the mounting system 100, according to one or more embodiments of the present disclosure. It should be understood that the description of the crossmember 106 provided with respect to Figs. 1A-3 is similarly applicable to the crossmember 106 illustrated in Figs. 6A-6H, and vice versa, without departing from the scope of the present disclosure.

Referring now to Figs. 6A-6F, the crossmember 106 illustrated in Figs. 1A-3 is further defined. It is noted that the crossmember 106 is illustrated as being of an indeterminate length, with the brackets in Figs. 6A, 6B, 6E, and 6F marking a break line 209. It is noted that Fig. 6B illustrates the width of the crossmember 106 and the length of the crossmember 106 (e.g., the direction of extrusion).

The crossmember 106 includes the rail 124 and the support bracket 126. The rail 124 includes the channels 142, 146 that are at least partially defined by the tabs 147 and 148. The support bracket 126 includes the channel 144, the notch 154, the protrusion 156, and the recess 186 within or proximate to the tab 149 extending from a head 210 at the distal end 153 of the support bracket 126 opposite the rail 124. The first lower channel 142 and the second lower channel 144 at least partially define the groove 212 into which the extension 108 may be inserted.

As illustrated in Figs. 6E and 6F, the crossmember 106 may optionally have one or more apertures 214 within the groove 212. For example, these apertures 214 may be used to couple the crossmember 106 directly to a mounting device 114 via a fastener 116, such that the adaptor 112 is not required. The apertures 214 may be circular, oval or elliptical, a slot that extends to a sidewall of the support bracket 126, or another shape without departing from the scope of the present disclosure. This reduces the complexity and the manufacturing cost of the mounting system 100, by eliminating the need for a component such as the adaptor 112. It is noted that removal of the adaptor 112 does not prohibit the use of the clip 120 with the crossmember 106.

In some embodiments, a sidewall 211 of the crossmember 106 opposite a sidewall 213 from which the support bracket 126 extends is substantially flat or planar. In other embodiments, the sidewall 211 includes one or more grooves 215 that run at least a portion of the length of the crossmember 106. In these embodiments, the grooves 215 may be configured to receive and/or couple to add-on components for the mounting system 100, including color strips, signage, or other markings. It is noted that the grooves 215 may be pre-formed prior to installation of the add-on components, other alternatively may be formed (e.g., manually, with tools) following the installation of the add-on components). In addition, it is noted that the mounting system 100 may be positioned on the metal panel 102 such that the add-on components are visible from the exterior of the structure that supports the metal panel 102 (e.g., downslope, where the mounting system 100 is installed on a sloped roof; outward, where the mounting system 100 is installed on a substantially planar roof; or the like).

Referring now to Figs. 6G-6H, a variation of the crossmember 106 in Figs. 6A-6F (and thus Figs. 1A-3) is illustrated. It is noted that the crossmember 106B in Figs. 6G-6H is illustrated as being of an indeterminate length, being cut-off at one end of the crossmember 106B.

The crossmember 106B in Figs. 6G and 6H includes the first tab 147 that extends outward from the rail 124 to at least partially define the lower channel 142. The crossmember 106B, however, does not include the optional second tab 148 that extends outward from the rail 124 on the crossmember 106 in Figs. 1A-3 and 6A-6F, such that the upper channel 146 is an open area above the first tab 147. It is contemplated that non-inclusion of the second tab 148 would result in the crossmember 106B being easier to manufacture, reducing manufacturing time and cost as compared to the crossmember 106.

It is noted, however, that other disclosure related to the crossmember 106 is applicable to the crossmember 106B, without departing from the scope of the present disclosure, such that the crossmember 106 and the crossmember 106B should generally be understood as being interchangeable within the mounting system 100. For example, although not shown, the optional apertures 214 may be circular, oval or elliptical, a slot that extends to a sidewall of the support bracket 126, or another shape without departing from the scope of the present disclosure. By way of another example, the notch 154 / protrusion 156 and the groove 212 of the crossmember 106, and the various portions of the crossmember 106 that define the notch 154 / protrusion 156 and the groove 212, should be understood as being similarly applicable to the crossmember 106B (including with respect to the interlocking of the adaptor 112 and/or the clip 120 to the crossmember 106B, although not shown). Further, the general configuration of the support bracket 126 of the crossmember 106 should be understood as being similarly applicable to the crossmember 106B.

Figs. 7A-7G further illustrate the extension 108 of the mounting system 100, according to one or more embodiments of the present disclosure. It should be understood that the description of the extension 108 provided with respect to Figs. 1A-3 is similarly applicable to the extension 108 illustrated in Figs. 7A-7G, and vice versa, without departing from the scope of the present disclosure.

Referring now to Figs. 7A-7E, the extension 108 illustrated in Figs. 1A-3 is further defined. The extension 108 includes the body 216 with the protrusions 143, 145 extending outward from the bottom in opposite directions. In some embodiments, the body 216 and the protrusions 143, 145 may together have a cross-section that is substantially similar to the cross-section of the groove 212 in the crossmember 106. It is noted that Fig. 7A illustrates the width of the extension 108 and the length of the extension 108 (e.g., the direction of extrusion).

The extension 108 may include smooth upper and lower surfaces, or may alternatively include projections 218. For example, the projections 218 may be fabricated to extend outward from a lower surface 220 of the extension 108 (e.g., from the portion of the lower surface 220 corresponding to the protrusions 143, 145), such that the extension 108 is unable to be inserted into the groove 212 beyond the projections 218, as the projections 218 make contact with the support bracket 126 (not shown). For instance, the projections 218 may be fabricated using one or more processes post-extrusion of the extension 108. It is noted, however, that the projections 218 may extend outward from an upper surface 222 of the extension 108 (e.g., from the portion of the upper surface 222 corresponding to the protrusions 143, 145), such that the projections 218 make contact with the tab 147 of the rail 124 and/or the tab 149 of the support bracket 126 of the crossmember 106 (not shown).

It is noted that Figs. 7A-7E (and thus Figs. 1A-3) illustrate a first version of the optional projections 218, which have substantially rounded interior surfaces that may be contoured to conform to a spherical surface area. In addition, it is noted that Figs. 7F-7G illustrate a variation of the extension 108B with a second version of the optional projections 218 that extend outward from the lower surface 220 (e.g., from the portion of the lower surface 220 corresponding to the protrusions 143, 145) to make contact with the support bracket 126 of the crossmember 106 (not shown). The second version of the optional projections 218 have a more wedged-shaped interior surface with a flat bottom, as compared to the circular or dome-like bottom of the first version in Figs. 7A-7E.

It is noted, however, that other disclosure related to the extension 108 is applicable to the extension 108B, without departing from the scope of the present disclosure, such that the extension 108 and the extension 108B should generally be understood as being interchangeable within the mounting system 100. For example, the projections 218 may extend outward from an upper surface 222 of the extension 108 (e.g., from the portion of the upper surface 222 corresponding to the protrusions 143, 145), such that the projections 218 make contact with the tab 147 of the rail 124 and/or the tab 149 of the support bracket 126 of the crossmember 106 (not shown).

It is noted that one or more of the components of the mounting system 100 may be fabricated from a metal. For example, the component may be fabricated from an extruded or machined aluminum.

Fig. 8 is a method or process flow diagram 800 illustrating the operation of the mounting system 100, in accordance with one or more embodiments or the present disclosure. While a general order for the steps of the method or process is shown in Fig. 8, the method or process can include more or fewer steps or can arrange the order of the steps differently (including simultaneously, substantially simultaneously, or sequentially) than those shown in Fig. 8. It is noted that the method or process shall be explained with reference to the components, devices, subassemblies, environments, etc. described in conjunction with Figs. 1A-7E. For example, it is noted that the embodiments as illustrated in Figs. 1A-7E should be understood as reading on the embodiments described with respect to Fig. 8, and vice versa, without departing from the scope of the present disclosure.

In embodiments, a mounting device is coupled 802 to a panel projection of a metal panel. The mounting device 114 may be coupled to the panel projection 104 via one or more fasteners 118 within corresponding apertures 168 in the mounting device 114.

In embodiments, a crossmember is positioned 804 on the mounting device. A surface 138 of a support bracket 126 of the crossmember 106 is set on a surface 140 of the mounting device 114. Optionally, a surface 136 of a rail 124 of the crossmember 106 may be set on a projection edge 134 of the panel projection 104.

In embodiments, an adaptor is installed 806 on the crossmember. The adaptor 112 is positioned within the support bracket 126 over the mounting device 114 such that interlocking features 152 / 154 and 156 / 158 of the adaptor 112 and the support bracket 126 engage. Additionally, the positioning of the adaptor 112 causes a proximal end 159 of an arm 150 of the adaptor 112 to be inserted into an upper channel 146 of the rail 124. Further, a surface 160 of the adaptor 112 is positioned on the surface 140 of the mounting device 114.

In embodiments, the adaptor is coupled 808 to the mounting device and the crossmember. A fastener 116 is inserted into an aperture 192 of the adaptor 112 and into an aperture 170 of the mounting device 114. Tightening of the fastener 116 couples the adaptor 112 to the mounting device 114, while also securing the support bracket 126 to the adaptor 112 and retaining the support bracket 126 between the adaptor 112 and the mounting device 114.

In an alternate embodiment to 806-808, the crossmember is coupled 810 to the mounting device. A fastener 116 passes through an aperture 214 within a groove 212 in the support bracket 126 of the crossmember 106, and engages an aperture 170 of the mounting device 114. Tightening of the fastener 116 secures the support bracket 126 to the mounting device 114. In this alternate step, the adaptor 112 is not a required component of the mounting assembly 110 for the particular mounting device 114 to which the crossmember 106 is being secured.

It is noted that at least the surface 138 of the support bracket 126 of the crossmember 106, the surface 140 of the mounting device 114, and optionally the surface 160 of the adaptor 112 may be substantially parallel to the surface 177 of the metal panel 102 following insertion of the fastener 116.

In an optional embodiment, a clip is positioned 812 on the crossmember. A clip 120 is positioned on the support bracket 126, such that interlocking features 154 / 178 and 156 / 180 of the clip 120 and the support bracket 126 engage. For example, the protrusion 178 of the clip 120 may be inserted into the notch 154 of the support bracket 126 in a direction away from the rail 124 of the crossmember 106 (or at least not toward the rail 124 of the crossmember 106), and the clip 120 may be adjusted within the notch 154 to cause the protrusion 156 of the support bracket 126 to engage the notch 180 of the clip 120. A foot 174 may be positioned against a surface of the metal panel 102.

In an optional embodiment, the clip is coupled 814 to the crossmember. A fastener 122 is inserted (or creates) an aperture 182 through a head 176 of the clip 120. A distal tip 184 of the fastener 122 engages a recess 186 on an exterior surface of the support bracket 126. Tightening of the fastener 122 causes the interlocking features 154 / 178 and 156 / 180 of the clip 120 to secure together, preventing removal of the clip 120 from the support bracket 126. The tightening of the fastener 122 additionally presses a surface 175 of the foot 174 against the metal panel 102.

In an optional embodiment, an additional crossmember is coupled 816 to the crossmember. An extension 108 is inserted into a groove 212 of the crossmember 106, where the groove 212 is formed in part by a first lower channel 142, a second lower channel 144, and a tab 147 that extends outward from the rail 124. Protrusions 143, 145 of the extension 108 fit with corresponding channels 142, 144 in the crossmember 106. For example, the extension 108 may be inserted into the groove 212 until projections 218 on the extension 108 may contact with the crossmember 106. The additional crossmember 106 may be similarly installed on the opposite end of the extension 108, which is secured to different mounting devices 114 on a different section of the metal panel 102.

It is noted that 812 / 814 and 816 may be additionally performed or alternatively performed as part of the process 800 for a particular crossmember 106, without departing from the scope of the present disclosure. In addition, it is noted that 812 / 814 may be performed prior to 816, without departing from the scope of the present disclosure. Further, it is noted that 802 / 804 may be performed for additional mounting devices prior to 816, as the additional crossmember from 816 may require the additional mounting devices, without departing from the scope of the present disclosure. Further, it is noted that 806 / 808 or 810, and optionally 812 / 814 and/or 816, may be performed after a prior instance of 816, without departing from the scope of the present disclosure. In general, the process 800 is directed to installing any number of mounting devices 114 and crossmember 106, with optional adaptors 112, clips 120, and/or extensions 108, without departing from the scope of the present disclosure.

In this regard, advantages of the present disclosure are directed to a mounting system for a metal panel. The mounting system is less complex and less restrictive in terms of methods of installation, reducing installation time and cost. The mounting system includes components that are economical to produce, reducing manufacturing material and time. The mounting system includes components that provide increased performance as compared to other known mounting systems. Advantages of the present disclosure include, but are not limited to, a mounting system with a mounting device that is couplable to a panel projection of the metal panel and to a crossmember, either directly via fasteners through the mounting device and the crossmember or indirectly via an adaptor. Advantages of the present disclosure also include, but are not limited to, a clip that provides additional points of contact between the crossmember and the metal panel. Advantages of the present disclosure further include, but are not limited to, an extension insertable into the crossmember for coupling additional crossmembers.

While various embodiments of the present disclosure have been described in detail, it is apparent that modifications and alterations of those embodiments will occur to those skilled in the art. However, it is to be understood that such modifications and alterations are within the scope and spirit of the present disclosure, as set forth in the following claims. Further, the disclosure described herein is capable of other embodiments and of being practiced or of being carried out in various ways. It is to be understood that the phraseology and terminology used herein is for the purpose of description and should not be regarded as limiting.

In particular, further embodiments are specified in the following items which can be combined individually or in any combination:
1. A mounting system for a metal panel, comprising:
   a mounting device operable to couple to a panel projection of the metal panel, the mounting device including an aperture;
   a crossmember, comprising:
      a rail including an upper channel formed by one or more tabs extending outward from a sidewall; and
      a support bracket that extends outward from the sidewall, the support bracket including a protrusion that extends toward the rail and a notch;
   an adaptor, comprising:
      a body including a protrusion that projects away from the rail of the crossmember and is insertable into the notch within the support bracket, and a notch able to receive the protrusion of the support bracket;
      an arm with a proximal end insertable into the upper channel; and
      a foot including an aperture; and
   a fastener operable to be inserted into the aperture of the foot and the aperture of the mounting device to couple the adaptor to the mounting device,
   wherein coupling the adaptor to the mounting device via the fastener secures the crossmember to the mounting device.
2. The mounting system of item 1, wherein, when the adaptor is coupled to the mounting device via the fastener, at least a portion of the support bracket is positioned in a gap between the adaptor and the mounting device.
3. The mounting system of item 1 or 2, wherein, when the adaptor is coupled to the mounting device via the fastener:
   a first surface of the crossmember is in contact with a surface of the mounting device;
   a first surface of the adaptor is in contact with a second surface of the crossmember; and
   a second surface of the adaptor is in contact with the surface of the mounting device.
4. The mounting system of item 3, wherein, when the adaptor is coupled to the mounting device via the fastener, the first surface of the crossmember, the surface of the mounting device, and the second surface of the adaptor are each substantially parallel to a surface of the metal panel.
5. The mounting system of one of the preceding items, wherein, when the adaptor is coupled to the mounting device via the fastener, a third surface of the crossmember is in contact with a projection edge of the panel projection.
6. The mounting system of one of the preceding items, wherein a gap within the upper channel between the proximal end of the arm of the adaptor and an interior surface of the rail.
7. The mounting system of one of the preceding items, wherein the support bracket includes a second notch and the arm of the adaptor includes a second protrusion that engages the second notch during insertion of the proximal end of the arm into the upper channel.
8. The mounting system of one of the preceding items, wherein the protrusion and the notch of the support bracket forms a partial C-shape interlocking assembly that is contoured to conform to an arc that is no greater than 180 degrees.
9. The mounting system of one of the preceding items, further comprising:
   a clip, comprising:
      a head including a protrusion that projects away from the rail of the crossmember and is insertable into the notch within the support bracket, and a notch able to receive the protrusion of the support bracket that extends toward the rail of the crossmember;
      a leg operable to be positioned proximate to the metal panel; and
      a body between the head and the leg; and
   a second fastener insertable through the head of the clip to engage a recess on the support bracket, wherein engagement of the recess with the second fastener secures the clip to the support bracket.
10. The mounting system of one of the preceding items, wherein the second fastener is insertable into a pre-formed aperture within the head of the clip.
11. The mounting system of one of the preceding items, wherein the leg includes a foot that, when the clip is coupled to the crossmember via the second fastener, is secured against a surface of the metal panel.
12. The mounting system of one of the preceding items, further comprising an extension insertable into a groove of the crossmember at least partially defined by a first lower channel and a second lower channel of the crossmember, wherein the extension is configured to couple an additional crossmember to the crossmember.
13. The mounting system of one of the preceding items, wherein the extension includes a first protrusion that is insertable into the first lower channel, and a second protrusion that is insertable into the second lower channel.
14. The mounting system of one of the preceding items, wherein the groove is below the upper channel of the crossmember, and wherein the adaptor is stacked on the extension when both are engaged within respective upper and lower channels of the crossmember.
15. The mounting system of one of the preceding items, wherein the crossmember and the mounting device are extruded along a respective length, wherein the adaptor is extruded along a respective width, and wherein the mounting system is arranged such that the width of the adaptor are oriented with the length of the crossmember.
16. A method for installation of a mounting system to a metal panel, comprising:
   coupling a mounting device to a panel projection of the metal panel, the mounting device including an aperture;
   positioning a crossmember on the mounting device, the crossmember comprising:
      a rail including an upper channel formed by one or more tabs extending outward from a sidewall; and
      a support bracket that extends outward from the sidewall, the support bracket including a protrusion that extends toward the rail and a notch;
   installing an adaptor on the crossmember, the adaptor comprising:
      a body including a protrusion that projects away from the rail of the crossmember and is insertable into the notch within the support bracket, and a notch able to receive the protrusion of the support bracket;
      an arm with a proximal end insertable into the upper channel; and
      a foot including an aperture; and
   coupling the adaptor to the mounting device via a fastener through the aperture of the foot and the aperture of the mounting device, wherein coupling the adaptor to the mounting device via the fastener secures the support bracket of the crossmember to the mounting device.
17. The method of item 16, further comprising:
   positioning a clip on the crossmember, wherein the clip comprises:
      a head including a protrusion that projects away from the rail of the crossmember andis insertable into the notch within the support bracket, and a notch able to receive the protrusion of the support bracket that extends toward the rail of the crossmember;
      a leg operable to be positioned proximate to the metal panel; and
      a body between the head and the leg; and
   coupling the clip to the crossmember via a second fastener insertable through the head of the clip to engage a recess on the support bracket, wherein engagement of the recess with the second fastener secures the clip to the support bracket.
18. The method of item 16 or 17, further comprising:
   coupling an additional crossmember to the crossmember via an extension insertable into a groove of the crossmember at least partially defined by a first lower channel and a second lower channel of the crossmember, wherein the extension is configured to couple the additional crossmember to the crossmember.
19. A mounting system for a metal panel, comprising:
   a mounting device operable to couple to a panel projection of the metal panel, the mounting device including a first aperture;
   a crossmember, comprising:
      a rail including a tab extending outward from a sidewall of the rail; and
      a support bracket that extends outward from the sidewall, the support bracket including an interlocking assembly with a partial C-shape that is contoured to conform to an arc that is no greater than 180 degrees;
   an adaptor comprising:
      a body able to engage the interlocking assembly with the partial C-shape of the support bracket;
      an arm with a proximal end positionable on the tab of the rail; and
      a foot including a second aperture; and
   a fastener operable to be inserted through the first aperture of the foot and into the second aperture of the mounting device to couple the adaptor to the mounting device,
   wherein coupling the adaptor to the mounting device via the fastener secures the crossmember to the mounting device.
20. The mounting system of item 19, further comprising:
   a clip, comprising:
      a head able to engage the interlocking assembly with the partial C-shape of the support bracket;
      a leg operable to be positioned proximate to the metal panel; and
      a body between the head and the leg; and
   a second fastener insertable through the head of the clip to engage a recess on the support bracket, wherein engagement of the recess with the second fastener secures the clip to the support bracket.

Even further embodiments are specified in the following items which can be combined individually or in any combination:
1. A mounting system for a metal panel, comprising:
   a mounting device operable to couple to a panel projection of the metal panel, the mounting device including an aperture;
   a crossmember, comprising:
      a rail including an upper channel formed by one or more tabs extending outward from a sidewall; and
      a support bracket that extends outward from the sidewall, the support bracket including a protrusion that extends toward the rail and a notch;
   an adaptor, comprising:
      a body including a protrusion that projects away from the rail of the crossmember and is insertable into the notch within the support bracket, and a notch able to receive the protrusion of the support bracket;
      an arm with a proximal end insertable into the upper channel; and
      a foot including an aperture; and
   a fastener operable to be inserted into the aperture of the foot and the aperture of the mounting device to couple the adaptor to the mounting device,
   wherein coupling the adaptor to the mounting device via the fastener secures the crossmember to the mounting device.
2. The mounting system of item 1, wherein, when the adaptor is coupled to the mounting device via the fastener, at least a portion of the support bracket is positioned in a gap between the adaptor and the mounting device.
3. The mounting system of one of the preceding items, wherein, when the adaptor is coupled to the mounting device via the fastener:
   a first surface of the crossmember is in contact with a surface of the mounting device;
   a first surface of the adaptor is in contact with a second surface of the crossmember; and
   a second surface of the adaptor is in contact with the surface of the mounting device.
4. The mounting system of one of the preceding items, wherein, when the adaptor is coupled to the mounting device via the fastener, the first surface of the crossmember, the surface of the mounting device, and the second surface of the adaptor are each substantially parallel to a surface of the metal panel.
5. The mounting system of one of the preceding items, wherein, when the adaptor is coupled to the mounting device via the fastener, a third surface of the crossmember is in contact with a projection edge of the panel projection.
6. The mounting system of one of the preceding items, further comprising:
   a clip, comprising:
      a head including a protrusion that projects away from the rail of the crossmember and is insertable into the notch within the support bracket, and a notch able to receive the protrusion of the support bracket that extends toward the rail of the crossmember;
      a leg operable to be positioned proximate to the metal panel; and
      a body between the head and the leg; and
   a second fastener, wherein the head of the clip includes an aperture though which the second fastener may engage a recess on the support bracket, and wherein engagement of the recess with the second fastener secures the clip to the support bracket.
7. The mounting system of one of the preceding items, wherein the leg includes a foot that, when the clip is coupled to the crossmember via the second fastener, is secured against a surface of the metal panel.
8. The mounting system of one of the preceding items, further comprising an extension insertable into a groove of the crossmember at least partially defined by a first lower channel and a second lower channel of the crossmember, wherein the extension is configured to couple an additional crossmember to the crossmember.
9. The mounting system of one of the preceding items, wherein the extension includes a first protrusion that is insertable into the first lower channel, and a second protrusion that is insertable into the second lower channel.
10. A mounting system for a metal panel, comprising:
   a mounting device operable to couple to a panel projection of the metal panel, the mounting device including an aperture;
   a crossmember including a rail and a support bracket that extends outward from a sidewall of the rail, the support bracket including a groove with an aperture; and
   a fastener operable to be inserted into the aperture of the groove and the aperture of the mounting device to couple the crossmember to the mounting device.
11. The mounting system of item 10, wherein, when the crossmember is coupled to the mounting device via the fastener, a surface of the crossmember is in contact with a surface of the mounting device, and wherein the surface of the crossmember and the surface of the mounting device are each substantially parallel to a surface of the metal panel.
12. The mounting system of item 11, wherein, when the crossmember is coupled to the mounting device via the fastener, a second surface of the crossmember is in contact with a projection edge of the panel projection.
13. The mounting system of one or more of items 10 to 12, further comprising:
   a clip, comprising:
      a head including a protrusion that projects away from the rail and is insertable into a notch within the support bracket, and a notch able to receive a protrusion of the support bracket that extends toward the rail;
      a leg operable to be positioned proximate to the metal panel; and
      a body between the head and the leg; and
   a second fastener, wherein the head of the clip includes an aperture though which the second fastener may engage a recess on the support bracket, and wherein engagement of the recess with the second fastener secures the clip to the support bracket.
14. The mounting system of item 13, wherein the leg includes a foot that, when the clip is coupled to the crossmember via the second fastener, is secured against a surface of the metal panel.
15. The mounting system of one or more of items 10 to 14, further comprising an extension insertable into a groove of the crossmember at least partially defined by a first lower channel and a second lower channel of the crossmember, wherein the extension is configured to couple an additional crossmember to the crossmember.
16. The mounting system of item 15, wherein the extension includes a first protrusion that is insertable into the first lower channel, and a second protrusion that is insertable into the second lower channel.
17. A method for installation of a mounting system to a metal panel, comprising:
   coupling a mounting device to a panel projection of the metal panel, the mounting device including an aperture;
   positioning a crossmember on the mounting device, the crossmember comprising:
      a rail including an upper channel formed by one or more tabs extending outward from a sidewall; and
      a support bracket that extends outward from the sidewall, the support bracket including a protrusion that extends toward the rail and a notch;
   installing an adaptor on the crossmember, the adaptor comprising:
      a body including a protrusion that projects away from the rail of the crossmember and is insertable into the notch within the support bracket, and a notch able to receive the protrusion of the support bracket;
      an arm with a proximal end insertable into the upper channel; and
      a foot including an aperture; and
   coupling the adaptor to the mounting device via a fastener through the aperture of the foot and the aperture of the mounting device, wherein coupling the adaptor to the mounting device via the fastener secures the support bracket of the crossmember to the mounting device.
18. The method of item 17, further comprising:
   positioning a clip on the crossmember, wherein the clip comprises:
      a head including a protrusion that projects away from the rail of the crossmember and is insertable into the notch within the support bracket, and a notch able to receive the protrusion of the support bracket that extends toward the rail of the crossmember;
      a leg operable to be positioned proximate to the metal panel; and
      a body between the head and the leg; and
   coupling the clip to the crossmember via a second fastener, wherein the head of the clip includes an aperture though which the second fastener may engage a recess on the support bracket, and wherein engagement of the recess with the second fastener secures the clip to the support bracket.
19. The method of one or more of items 17 and 18, further comprising:
   coupling an additional crossmember to the crossmember via an extension insertable into a groove of the crossmember at least partially defined by a first lower channel and a second lower channel of the crossmember, wherein the extension is configured to couple the additional crossmember to the crossmember.
20. A method for installation of a mounting system to a metal panel, comprising:
   coupling a mounting device to a panel projection of the metal panel, the mounting device including an aperture;
   positioning a crossmember on the mounting device, the crossmember including a rail and a support bracket that extends outward from a sidewall of the rail, the support bracket including a groove with an aperture; and
   coupling the crossmember to the mounting device via a fastener through the aperture of the groove and the aperture of the mounting device, wherein coupling the crossmember to the mounting device via the fastener secures the crossmember to the mounting device.

## Claims

1. A crossmember for a metal panel, comprising:
a rail including a first tab extending outward from a sidewall of the rail; and
a support bracket that extends outward from the sidewall, the support bracket comprising:
a lower surface that is oriented approximately perpendicular to the sidewall of the rail;
a second tab extending toward the first tab, wherein a first bottom surface of the first tab is approximately co-planar with a second bottom surface of the second tab; and
an interlocking assembly with a partial C-shape that is contoured to conform to an arc that is no greater than 180 degrees, the interlocking assembly comprising a first protrusion that extends toward the rail and a first notch.

2. The crossmember of claim 1, wherein:
the first notch comprises a closed end and an open end, the open end facing the sidewall of the rail; and
an axis of the first notch extends from the closed end and out of the open end and intersects a reference plane oriented parallel to the sidewall of the rail.

3. A mounting system for a metal panel, comprising:
a mounting device operable to couple to a panel projection of the metal panel, the mounting device including a first aperture;
a crossmember, comprising:
a rail including an upper channel formed by a tab extending outward from a sidewall of the rail; and
a support bracket that extends outward from the sidewall, the support bracket including a first protrusion that extends toward the rail and a first notch;
an adaptor, comprising:
a body including a second protrusion and a second notch, the second protrusion projecting away from the rail of the crossmember when the adaptor is coupled to the crossmember such that the second protrusion is adapted to be insertable into the first notch of the support bracket, and the second notch adapted to receive the first protrusion of the support bracket;
an arm with a proximal end insertable into the upper channel; and
a leg including a second aperture; and
a fastener operable to be inserted through the second aperture of the foot and into the first aperture of the mounting device to couple the adaptor to the mounting device,
wherein coupling the adaptor to the mounting device via the fastener secures the support bracket of the crossmember to the mounting device.

4. The mounting system of claim 3, wherein, when the adaptor is coupled to the mounting device via the fastener, at least a portion of the support bracket is positioned in a gap between the adaptor and the mounting device.

5. The mounting system of claim 3, wherein, when the adaptor is coupled to the mounting device via the fastener:
a first surface of the support bracket is in contact with a surface of the mounting device;
a first surface of the adaptor is in contact with a second surface of the support bracket; and
a second surface of the adaptor is in contact with the surface of the mounting device.

6. The mounting system of claim 5, wherein, when the adaptor is coupled to the mounting device via the fastener, the first surface of the support bracket, the surface of the mounting device, and the second surface of the adaptor are each substantially parallel to a surface of the metal panel, and/or
wherein, when the adaptor is coupled to the mounting device via the fastener, a third surface of the crossmember is separated from a projection edge of the panel projection by a gap.

7. The mounting system of claim 3, wherein, when the adaptor is coupled to the crossmember, a gap exists within the upper channel between the proximal end of the arm of the adaptor and an interior surface of the rail; and/or
wherein the support bracket includes a recess and the arm of the adaptor includes a projection that engages the recess during insertion of the proximal end of the arm into the upper channel.

8. The mounting system of claim 3, wherein the first protrusion and the first notch of the support bracket form an interlocking assembly with a partial C-shape that is contoured to conform to an arc that is no greater than 180 degrees.

9. The mounting system of claim 3, further comprising:
a clip, comprising:
a head including a third protrusion and a third notch, wherein the third protrusion projects away from the rail of the crossmember when the clip is coupled to the crossmember, the third protrusion being insertable into the first notch within the support bracket, and the third notch adapted to receive the first protrusion of the support bracket;
a leg operable to be positioned proximate to the metal panel; and
a body between the head and the leg; and
a second fastener insertable through the head of the clip to engage a recess on the support bracket, wherein engagement of the recess with the second fastener secures the clip to the support bracket.

10. The mounting system of claim 9, wherein the second fastener is insertable into a pre-formed aperture within the head of the clip, and/or wherein the leg includes a foot that, when the second fastener secures the clip to the support bracket, is secured against a surface of the metal panel.

11. The mounting system of claim 3, further comprising an extension insertable into a groove of the crossmember at least partially defined by a first lower channel and a second lower channel of the crossmember, wherein the extension is configured to couple an additional crossmember to the crossmember.

12. The mounting system of claim 11, wherein the extension includes a first projection that is insertable into the first lower channel, and a second projection that is insertable into the second lower channel, and/or
wherein the groove is below the upper channel of the crossmember, and wherein the adaptor is stacked on the extension when both are engaged within respective upper and lower channels of the crossmember.

13. The mounting system of claim 3, wherein the crossmember is extruded along a length, wherein the adaptor is extruded along a width, and wherein the mounting system is arranged such that the width of the adaptor is oriented with the length of the crossmember.

14. A method for installation of a mounting system to a metal panel, comprising:
coupling a mounting device to a panel projection of the metal panel, the mounting device including a first aperture;
positioning a crossmember on the mounting device, the crossmember comprising:
a rail including an upper channel formed by a tab extending outward from a sidewall of the rail; and
a support bracket that extends outward from the sidewall, the support bracket including a first protrusion that extends toward the rail and a first notch;
installing an adaptor on the crossmember, the adaptor comprising:
a body including a second protrusion and a second notch, the second protrusion projecting away from the rail of the crossmember when the adaptor is coupled to the crossmember such that the second protrusion is inserted into the first notch of the support bracket, and the first protrusion of the support bracket is received by the second notch of the adaptor;
an arm with a proximal end inserted into the upper channel; and
a leg including a second aperture; and
coupling the adaptor to the mounting device via a fastener through the second aperture of the foot and the first aperture of the mounting device, wherein coupling the adaptor to the mounting device via the fastener secures the support bracket of the crossmember to the mounting device.

15. The method of claim 14, further comprising:
positioning a clip on the crossmember, wherein the clip comprises:
a head including a third protrusion and a third notch, wherein the third protrusion projects away from the rail of the crossmember when the clip is coupled to the crossmember, the third protrusion is inserted into the first notch within the support bracket, and the first protrusion of the support bracket is received by the third notch of the clip;
a leg operable to be positioned proximate to the metal panel; and
a body between the head and the leg; and
coupling the clip to the crossmember via a second fastener insertable through the head of the clip to engage a recess on the support bracket, wherein engagement of the recess with the second fastener secures the clip to the support bracket;
and/or further comprising:
coupling an additional crossmember to the crossmember via an extension insertable into a groove of the crossmember at least partially defined by a first lower channel and a second lower channel of the crossmember, wherein the extension is configured to couple the additional crossmember to the crossmember.
